(19) Europäisches Patentamt
European Patent Office
Office européen des brevets

(11) **EP 3 570 510 B1**

(12) **EUROPEAN PATENT SPECIFICATION**

(45) Date of publication and mention
of the grant of the patent:
**07.09.2022 Bulletin 2022/36**

(21) Application number: **17891620.1**

(22) Date of filing: **12.05.2017**

(51) International Patent Classification (IPC):
*H04L 27/227* $^{(2006.01)}$    *H04L 27/00* $^{(2006.01)}$
*H04L 27/20* $^{(2006.01)}$    *H04L 25/03* $^{(2006.01)}$

(52) Cooperative Patent Classification (CPC):
**H04L 27/2272;** H04L 25/03178; H04L 27/201;
H04L 2027/0028; H04L 2027/0055;
H04L 2027/0067; H04L 2027/0085

(86) International application number:
**PCT/CN2017/084038**

(87) International publication number:
**WO 2018/129843 (19.07.2018 Gazette 2018/29)**

(54) **ARTM CPM DEMODULATION AND SYNCHRONIZATION METHOD WITH LOW IMPLEMENTATION COMPLEXITY**

ARTM-CPM-DEMODULATIONS- UND SYNCHRONISATIONSVERFAHREN MIT GERINGER IMPLEMENTIERUNGSKOMPLEXITÄT

PROCÉDÉ DE DÉMODULATION ET DE SYNCHRONISATION ARTM CPM À FAIBLE COMPLEXITÉ DE MISE EN OEUVRE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.01.2017 CN 201710024925**

(43) Date of publication of application:
**20.11.2019 Bulletin 2019/47**

(73) Proprietors:
• **Beijing Research Institute of Telemetry
Beijing 100076 (CN)**
• **Aerospace Long March Launch Vehicle
Technology Co. Ltd.
Beijing 100076 (CN)**

(72) Inventors:
• **CHANG, Hongyu
Beijing 100094 (CN)**
• **DING, Xingwen
Beijing 100094 (CN)**
• **CHEN, Ming
Beijing 100076 (CN)**

(74) Representative: **Lavoix
Bayerstraße 83
80335 München (DE)**

(56) References cited:
CN-A- 1 710 898     CN-A- 102 624 662
CN-A- 105 635 014     US-A1- 2003 099 313
US-A1- 2009 175 384

## Description

### FIELD

The present disclosure relates to a method for implementing demodulation and synchronization with low complexity in ARTM CPM, which belongs to the technical field of digital signal processing.

### BACKGROUND

In 2004, the Multi-h CPM modulation was adopted into the IRIG-106 telemetry standard and named as ARTM (Advanced Range Telemetry) CPM by US military ARTM. It is specified in the IRIG-106 telemetry standard that the ARTM CPM is quaternary communication, in which dual modulation indices are adopted and alternately used based on a symbol rate. A raised-cosine pulse is adopted as a frequency pulse, of which a pulse length is 3 times the symbol duration. The ARTM CPM is a partial response system.

Modulation parameters of the ARTM CPM are as follows.

A modulation index is {4/16, 5/16}, which varies alternately based on symbol rate.

An M-ary number of the symbol system is 4, and an M-ary alphabet of the symbol system is -3, -1, 1 and 3, respectively.

A frequency pulse is a raised-cosine pulse, of which a correlation length is three. The raised-cosine pulse function g(t) is expressed as follows.

$$g(t) = \begin{cases} \frac{1}{2LT}\left[1 - \cos\left(\frac{2\pi t}{LT}\right)\right], & 0 \le t \le LT \\ 0, & \text{else} \end{cases}$$

By selecting the above modulation parameters, the ARTM CPM modulation mechanism is significantly superior to the current PCM-FM telemetry mechanism in terms of bandwidth efficiency, and has bandwidth efficiency approximately three times as the PCM-FM mechanism. Therefore, the ARTM CPM modulation mechanism has broad application prospects in launch vehicles and in telemetry systems of missile ranges in the future.

The ARTM CPM mechanism gains the advantage in bandwidth efficiency at an expense of high demodulation complexity and synchronization difficulties. An optimal demodulator based on a maximum likelihood sequence detection algorithm is adopted to acquire an optimal error performance. Such demodulator is based on a state trellis diagram and is implemented by using a Viterbi decoder. Complexity of the implementation is mainly determined by a quantity of matched filters and a quantity of decoder states. The ARTM CPM optimal demodulator requires 64 complex matched filters and 512 states, and is difficult to implement for hardware of conventional levels.

Communication quality of the ARTM CPM system is largely determined by a performance of a synchronization algorithm. Early studies on demodulation of ARTM CPM were conducted based on an assumption that synchronization had been established, that is, a carrier phase and symbol timing were accurately known, and a channel has an additive white Gaussian noise. In practice, coherent demodulation in the ARTM CPM has high requirement on carrier synchronization, and accurate symbol timing is required even in case of non-coherent demodulation. Regarding synchronization of the ARTM CPM, the document "Joint Symbol Timing and Carrier Phase Estimation for Multi-h CPM" (YANG Chunxiao et al., Journal of System Simulation, vol. 21, No. 19, pp. 6207-6010, Oct. 2009) uses the maximum likelihood algorithm to perform joint estimation of symbol timing and carrier phase in the Walsh signal space. An estimable deviation in timing is small, and it is only suitable for synchronization during a synchronization tracking stage.

Patent document US2009/175384 A1 discloses multi-symbol non-coherent CPM detectors having a trellis structure including a receiver, observation, a memory, and adjustment portions. A matched filter bank is configured to perform multiple-symbol filtering on received signals. A trellis-based lock detector is configured to compute a global survivor for consecutive time indexes as a maximum cumulative branch metric corresponding to a given time index for consecutive branches of the trellis structure.

### SUMMARY

An objective of the present disclosure is to overcome deficiencies of conventional technology and provide a method for implementing demodulation and synchronization with low complexity in ARTM CPM. According to the method for demodulation, only 16 complex matched filters are required, and a quantity of states corresponding to each symbol duration is 64. Complexity in demodulation is greatly reduced in comparison with the optimal demodulator having 64 complex matched filters and 512 states, and a loss in demodulation performance is minimized.

The aforementioned objective of the present disclosure is achieved by following solutions.

The invention is defined by a method for implementing demodulation and synchronization with low complexity in ARTM CPM according to claim 1. Further method steps are defined by the attached dependent claims.

According to the aforementioned method for implementing demodulation and synchronization with low complexity in ARTM CPM, in the step 2, filter coefficients of the matched subfilters in the two matched filter banks are calculated based on:

$$\xi_{p,1}(n) = e^{-j2\pi\left[h_1\gamma_k q(nT_s-(m-1)T)+h_2\gamma_l q(nT_s-mT)\right]}, floor\left((m+\frac{1}{2})\frac{T}{T_s}\right) \leq n \leq floor\left((m+\frac{3}{2})\frac{T}{T_s}\right);$$

and

$$\xi_{p,2}(n) = e^{-j2\pi\left[h_2\gamma_k q(nT_s-(m-1)T)+h_1\gamma_l q(nT_s-mT)\right]}, floor\left((m+\frac{1}{2})\frac{T}{T_s}\right) \leq n \leq floor\left((m+\frac{3}{2})\frac{T}{T_s}\right),$$

where $\xi_{p,1}(n)$ is a filter coefficient of a $p$-th matched subfilter in a first matched filter bank, $\xi_{p,2}(n)$ is a filter coefficient of a $p$-th matched subfilter in a second matched filter bank, $p = (k\text{-}1)\times M+l$, $q(t)$ is a preset phase pulse function, $q(nT_s - mT)$ is a sampling value of $q(t)$ at $t = nT_s - mT$, $q(nT_s\text{-}(m\text{-}1)T)$ is a sampling value of $q(t)$ at $t = nT_s\text{-}(m\text{-}1)T$, $T$ is the preset symbol duration, $\gamma_k = 2(k\text{-}1)\text{-}(M\text{-}1)$, $\gamma_l = 2(l\text{-}1) - (M\text{-}1)$, $k =1, 2, ..., M$, $l =1, 2, ..., M$, $h_1$ and $h_2$ are a preset first modulation index and a preset second modulation index, respectively, and *floor* represents a round-down function.

According to the aforementioned method for implementing demodulation and synchronization with low complexity in ARTM CPM, in the step 2, the matched subfilter performs matched filtering on the baseband signal, where the matched filtering is based on:

$$u(m) = \sum_{n=floor\left[(m+\frac{1}{2})\frac{T}{T_s}\right]}^{floor\left[(m+\frac{3}{2})\frac{T}{T_s}\right]} f(n)\xi(n),$$

where $u(m)$ is the matched filtering results obtained by performing the matched filtering process on the baseband signal via the matched subfilter, $f(n)$ is a baseband signal to be filtered, and $\xi(n)$ is a filtering coefficient of the matched subfilter, $T$ is the preset symbol duration, and *floor* represents the round-down function.

According to the aforementioned method for implementing demodulation and synchronization with low complexity in ARTM CPM, in the step 3, the phase compensation is based on:

$$v(m) = u(m)e^{-j\delta(m)},$$

where $v(m)$ is an output result of phase compensation; $u(m)$ is the matched filtering result to be compensated; $\delta(m)$ is a tilted phase difference corresponding to an m-th symbol duration, and $\delta(m)$ is recursively updated based on the modulation index corresponding to the symbol duration.

According to the aforementioned method for implementing demodulation and synchronization with low complexity in ARTM CPM, in the phase compensation, the tilted phase difference $\delta(m)$ is recursively updated based on:

$$\delta(m) = \delta(m-1) + 3\pi h'_{m-1},$$

where $\delta(m\text{-}1)$ is a tilted phase difference corresponding to the $(m\text{-}1)$-th symbol duration, and an initial value $\delta(0)$ of the tilted phase difference is zero, $h'_{m-1}$ is the modulation index corresponding to the m-th symbol duration, where there is $h'_{m-1} = h_1$ in case of mod($m$-1,2) = 0 and $h'_{m-1} = h_2$ in case of mod($m$-1,2) =1, $h_1$ and $h_2$ are the preset first modulation index and the preset second modulation index, respectively.

According to the aforementioned method for implementing demodulation and synchronization with low complexity in ARTM CPM, in the step 4, the Viterbi demodulation is performed on the I-branch phase-compensation-output vector $\mathbf{V}'(m)$, where the Viterbi demodulation includes:

step 4a, calculating branch metrics based on $\mathbf{V}'(m)$, where the branch metrics of $M$ branches entering each state are calculated in the $m$-th symbol duration;
step 4b, calculating $M$ path metrics for each state in the $m$-th symbol duration based on the branch metrics calculated in the step 4a;
step 4c, determining a survivor path and a survivor path metric for each state in the $m$-th symbol duration, and saving the survivor path and the survivor path metric for each state; and
step 4d, determining a survivor state of the $m$-th symbol duration, and backtracking from the survivor state being a backtracking starting point according to the surviving path saved in the step 4c, in case of $m \geq D_1$ or $m \geq D_2$, where $D_1$ symbols are backtracked across to obtain the demodulated data in case of $m \geq D_1$, $D_2$ symbols are backtracked across to obtain the synchronous demodulation state in case of that $m \geq D_2$, $D_1$ is a preset backtracking length for demodulation, and $D_2$ is a preset backtracking length for synchronous demodulation.

According to the aforementioned method for implementing demodulation and synchronization with low complexity in ARTM CPM, in the step 4a, the branch metrics are calculated based on:

$$\beta_{S_{w',k',i}}(m) = \mathrm{Re}\left\{ v'_{p_i}(m) \times e^{-j2\pi\frac{w_i-1}{W}} \right\},$$

where $\beta_{S_{w',k',i}}(m)$ is a branch metric of an $i$-th branch entering a state $S_{w',k'}$ in the $m$-th symbol duration, the $i$-th branch corresponds to a state $S_{w_i,k_i}$ in the $(m-1)$-th symbol duration, the state $S_{w_i,k_i}$ in the $(m-1)$-th symbol duration enters the state $S_{w',k'}$ in the $m$-th symbol duration via the $i$-th branch, $w'$=1, 2, ..., $W$, $k'$ = 1, 2 ..., $M$, $i$ = 1, 2, ..., $M$, **Re** represents a function for taking a real part, $W$ is a preset quantity of simplified phase states, $v'_{p_i}(m)$ is a $p_i$-th phase compensation result in the I-branch phase-compensation-output vector $\mathbf{V}'(m)$ and $p_i = (k_i - 1) \times M + k'$, and a corresponding relationship among $w_i$, $k_i$ and $w'$ is:

$$w' = \mathrm{mod}\left( (w_i - 1) + (k_i - 1) \times h'_m \times W, W \right) + 1,$$

where $w_i \in \{1,2,3,...,W\}$, $k_i \in \{1,2,3,...,M\}$, $h'_m$ is the modulation index corresponding to the $m$-th symbol duration, $h'_m = h_1$ in case of $\mathrm{mod}(m, 2) = 0$, $h'_m = h_2$ in case of $\mathrm{mod}(m,2) =1$, and $h_1$ and $h_2$ are the preset first modulation index and the preset second modulation index, respectively.

According to the aforementioned method for implementing demodulation and synchronization with low complexity in ARTM CPM, in the step 4b, the path metrics are calculated based on:

$$\lambda_{S_{w',k',i}}(m) = \lambda'_{S_{w_i,k_i}}(m-1) + \beta_{S_{w',k',i}}(m),$$

where $\lambda_{S_{w',k',i}}(m)$ is a path metric corresponding to the $i$-th branch entering the state $S_{w',k'}$ in the $m$-th symbol duration, $\beta_{S_{w',k',i}}(m)$ is the branch metric of the $i$-th branch, and the $i$-th branch corresponds to the state $S_{wi,ki}$ in the $(m-1)$-th symbol duration, the state $S_{w_i,k_i}$ in the $(m-1)$-th symbol duration enters the state $S_{w',k'}$ in the $m$-th symbol duration via the $i$-th branch, $\lambda'_{S_{w_i,k_i}}(m-1)$ is the survivor path metric of the state $S_{wi,ki}$ in the $(m-1)$-th symbol duration, an initial value $\lambda'_{S_{w_i,k_i}}(0)$ is zero, $w'$=1, 2, ..., $W$, $k'$ = 1, 2, ..., $M$, $i$ = 1, 2, ..., $M$, $W$ is the preset quantity of simplified phase states, and

a corresponding relationship among $w_i$, $k_t$ and $w'$ is:

$$w' = \mathrm{mod}\left( (w_i - 1) + (k_i - 1) \times h'_m \times W, W \right) + 1,$$

where $w_i \in \{1,2,3,...,W\}$, $k_i \in \{1,2,3,...,M\}$, $h'_m$ is the modulation index corresponding to the $m$-th symbol duration, $h'_m = h_1$ in case of mod($m$, 2) = 0, $h'_m = h_2$ in case of mod($m$, 2) =1, and $h_1$ and $h_2$ are the preset first modulation index and the preset second modulation index, respectively.

According to the aforementioned method for implementing demodulation and synchronization with low complexity in ARTM CPM, in the step 4c, a method for determining the survivor path and the survivor path metric is:

selecting, for the state $S_{w',k'}$ in the $m$-th symbol duration, a maximum one among the $M$ path metrics corresponding to the state $S_{w',k'}$ as the survivor path metric $\lambda'_{S_{w',k'}}(m)$ for the state $S_{w',k'}$, where $\lambda'_{S_{w',k'}}(m) = \max_i(\lambda_{S_{w',k',i}}(m))$, $\lambda'_{S_{w',k'}}(m)$ is the $i$-th path metric corresponding to the state $S_{w',k'}$ in the $m$-th symbol duration, $i$=1, 2, ..., $M$; and

determining a path corresponding to the survivor path metric $\lambda'_{S_{w',k'}}(m)$ as the survivor path of the state $S_{w',k'}$ in the $m$-th symbol duration, where $w'$=1, 2, ..., $W$, $k'$ = 1, 2, ..., $M$, and $W$ is the preset quantity of simplified phase states.

According to the aforementioned method for implementing demodulation and synchronization with low complexity in ARTM CPM, in the step 4d, the survivor state of the $m$-th symbol duration is determined by: selecting, among all states corresponding to the $m$-th symbol duration, a state corresponding to a maximum one of the survivor path metrics as the survivor state of the $m$-th symbol duration.

According to the aforementioned method for implementing demodulation and synchronization with low complexity in ARTM CPM, in the step 4d, $D_1$ symbols are backtracked across to obtain the demodulated data in case of $m \geq D_1$, which includes:

determining the survivor state of the $m$-th symbol duration to be a starting point for backtracking, backtracking across the $D_1$ symbols in sequence, according to the survivor path of the corresponding state in each symbol duration that is saved in step 4c, to reach a state $S_{w'_{jt},k'_{jt}}$ of an ($m$-$D_1$)-th symbol duration, determining the state $S_{w'_{jt},k'_{jt}}$ as the demodulation state, and determining the demodulated data based on the demodulation state, where the demodulated data is $\alpha(m$-$D_1)$ = $k_{jt}'$ -1, and values of $k_{jt}'$-1 are in a one-to-one correspondence to symbols of ARTM CPM, $w'_{jt} \in \{1, 2, 3,..., W\}$, $k'_{jt} \in \{1, 2, 3,..., M\}$, and $W$ is the preset quantity of simplified phase states.

According to the aforementioned method for implementing demodulation and synchronization with low complexity in ARTM CPM, the $D_2$ symbols are backtracked across to obtain the synchronous demodulation state in case of $m \geq D_2$, which includes:

determining the survivor state of the $m$-th symbol duration to be the starting point for backtracking, and backtracking across the $D_2$ symbols, according to the survivor path of the corresponding state in each symbol duration that is saved in the step 4c, to reach a state $S_{w'_{tb},k'_{tb}}$ of an ($m$ - $D_2$)-th symbol duration, and determining the state $S_{w'_{tb},k'_{tb}}$ as the synchronous demodulation state; where $w'_{tb} \in \{1, 2, 3,..., W\}$, $k'_{tb} \in \{1, 2, 3,..., M\}$, and $W$ is the preset number of simplified phase states.

According to the aforementioned method for implementing demodulation and synchronization with low complexity in ARTM CPM, in the step 4d, the length $D_1$ for demodulation backtracking and the length $D_2$ for synchronization demodulation backtracking are determined according to preset requirements of data decision accuracy and a demodulation delay, where $D_1$ and $D_2$ are proportional to the data decision accuracy and the demodulation delay.

According to the aforementioned method for implementing demodulation and synchronization with low complexity in ARTM CPM, in the step 5, the timing error $e_\tau(m)$ and the carrier phase error $e_\varphi(m)$ are calculated based on:

$$e_\tau(m) = \mathrm{Re}\left\{ e^{-j2\pi\frac{w_o-1}{W}} \left( v''_{P_o}(m) - v_{P_o}(m) \right) \right\}$$

and

$$e_\varphi(m) = \mathrm{Im}\left\{ e^{-j2\pi\frac{w_o-1}{W}} v'_{P_o}(m) \right\},$$

where the synchronous demodulation state is $S_{w'_{tb},k'_{tb}}$ and the survivor path of the state $S_{w'_{tb},k'_{tb}}$ corresponds to a state $S_{w_{tb},k_{tb}}$ in a previous symbol duration, $w_o = w_{tb}$, and $P_o = (k_{tb}-1)\times M + k'_{tb}$; $v_{P_o}(m)$ is the $p_o$-th phase-compensation-output result in $\mathbf{V}(m)$, $v'_{P_o}(m)$ is the $p_o$-th phase-compensation-output result in $\mathbf{V'}(m)$, $v''_{P_o}(m)$ is the $p_o$-th phase-compensation-output result in $\mathbf{V''}(m)$; $\mathbf{Re}$ represents a function for taking a real part, $\mathbf{Im}$ represents a function for taking an imaginary part; where $w'_{tb} \in \{1,2,3,...,W\}$, $k'_{tb} \in \{1,2,3,...,M\}$, $w_{tb} \in \{1,2,3,...,W\}$, $k_{tb} \in \{1,2,3,...,M\}$, and $W$ is the preset quantity of simplified phase states.

According to the aforementioned method for implementing demodulation and synchronization with low complexity in ARTM CPM, in the step 6, code loop filtering is performed on the timing error $e_\tau(m)$ to obtain an amount for phase adjustment, where the amount for phase adjustment is outputted to the code NCO, and a phase of the pulse signal for symbol synchronization is adjusted by the code NCO according to the amount for phase adjustment.

According to the aforementioned method for implementing demodulation and synchronization with low complexity in ARTM CPM, in the step 6, carrier loop filtering is performed on the carrier phase error $e_\varphi(m)$ to output an amount for phase adjustment, where the amount for phase adjustment is outputted to the carrier NCO, and the local frequency of the carrier outputted by the carrier NCO is adjusted by the carrier NCO according to the amount for phase adjustment.

Compared with conventional technology, the present disclosure has following advantages.

(1) The three branches according to the present disclosure share the matched filter bank, the matched filter bank only includes 16 complex matched filters, and the quantity of states in each symbol duration according to the present disclosure is 64. Compared to the conventional optimal demodulator which has 64 complex matched filters and 512 states, the method according to the present disclosure can greatly reduce the demodulation complexity, and it can be ensured that the loss in demodulation performance is minimized.

(2) The present disclosure adopts three branch signals to jointly perform timing and synchronization calculation. Timing precision can be improved, and system stability can be effectively improved.

## BRIEF DESCRIPTION OF THE DRAWINGS

Figure 1 is a block diagram of method for implementing demodulation and synchronization with low complexity in ARTM CPM according to the present disclosure;

Figure 2 is a flow chart of a Viterbi demodulation process in the present disclosure;

Figure 3 is a curve of a demodulation bit error performance of ARTM CPM according to an embodiment of the present disclosure; and

Figure 4 is a curve of timing synchronous tracking of ARTM CPM according to an embodiment of the present disclosure.

## DETAILED DESCRIPTION

Hereinafter the present disclosure is further described in detail in conjunction with drawings and specific embodiments.

In order to facilitate detailed description of the present disclosure, some variables that follow are first described. $T_s$ is a preset sampling period. $T$ is a preset symbol duration. $h_1$ and $h_2$ are a preset first modulation index and a preset second modulation index, respectively. In ARTM CPM, values of the two modulation indices are 4/16 and 5/16. According to the present disclosure, it may be preset that $h_1$ = 4/16 and $h_2$ = 5/16, or that $h_1$ = 5/16 and $h_2$ = 4/16. *floor* represents a round-down function, for example, *floor*($x$) represents rounding down a variable $x$. max represents a function for taking the maximum, for example $\max_i(x_i)$ is to take the maximum value from a sequence $x_i$, where $i$ is a label for the sequence. In case of $i$ = 1 ~ $M$ and $M$ being a positive integer, $\max_i(x_i)$ represents taking the maximum value among $x_1, x_2, ..., $ and $x_M$.

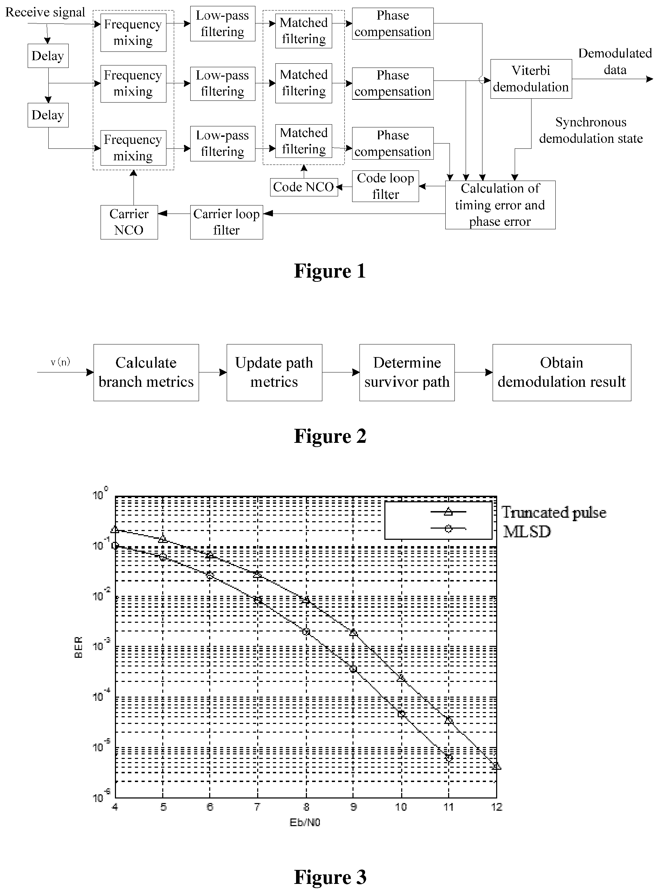

As shown in Figure 1, specific steps of the method for implementing demodulation and synchronization with low complexity in ARTM CPM according to the present disclosure are as follows.

### I. Processing on Three Branch Signals

According to the present disclosure, a received signal $r(n)$ is first delayed by $T_s$ and $2T_s$ to obtain a first-order delayed signal $r'(n)$ and a second-order delayed signal $r''(n)$, respectively. Then, $r(n)$, $r'(n)$, $r''(n)$ are correspondingly processed in E-branch, I-branch and L-branch. $n$ is a discrete time variable. $r(n)$ is a digital signal that has been sampled and quantized, where a sampling period is $T_s$.

### (1) Frequency Mixing and Low-pass Filtering

Frequency mixing and low-pass filtering are performed on the signal $r(n)$ to obtain an E-branch baseband signal $f(n)$. Frequency mixing and low-pass filtering are performed on the first-order delayed signal $r'(n)$ to obtain an I-branch baseband signal $f'(n)$. Frequency mixing and low-pass filtering are performed on the second-order delayed signal $r''(n)$ to obtain an L-branch baseband signal $f''(n)$.

A local frequency of a carrier in the frequency mixing on the three branches is controlled by a carrier NCO. A specific process of the frequency mixing and the filtering is as follows. First, a corresponding local carrier signal is generated according to the local frequency of the carrier provided by the carrier NCO. Then, the local carrier signal is multiplied by $r(n)$, $r'(n)$, and $r''(n)$, respectively, to output mixed signals. Afterwards, the mixed signal of each branch is filtered by using a low-pass filter, so as to obtain $f(n)$, $f'(n)$ and $f''(n)$. Settings of the low-pass filter in each branch are identical.

In a specific engineering embodiment, the carrier NCO is provided with an initial local frequency of the carrier, and afterwards the carrier NCO is adjusted according to a result of subsequent phase synchronization for the carrier. Thereby, synchronization of a carrier phase is achieved.

### (2) Matched Filtering

According to the present disclosure, two matched filter banks are alternately used to perform matched filtering on the E-branch baseband signal $f(n)$, the I-branch baseband signal $f'(n)$, and the L-branch baseband signal $f''(n)$, respectively. Each of the matched filter banks includes $P$ matched subfilters. The $P$ matched subfilters perform matched filtering on the baseband signal of each branch, to output a matched-filtering-result vector that includes $P$ matched filtering results. $P = M^2$, and $M$ is a preset size of a symbol alphabet of a symbol system. For a modulating signal in the ARTM CPM, the size of the symbol alphabet of the symbol system is preset to be 4 in modulation parameters. Namely, $M$=4, and thereby $P$=16. Therefore, 16 matched filters are used to implement matched filtering in the demodulation and synchronization of ARTM CPM according to the present disclosure.

### (2.1) Definition for Matched Filter Banks

According to the present disclosure, the two matched filter banks are alternately used to perform the matched filtering. A specific manner of alternating is as follows. In case of mod($m$, 2) = 0, a first matched filter bank is used to perform the matched filtering on the three branches. In case of mod($m$,2) =1, a second matched filter bank is used to perform matched filtering on the three branches. Filter coefficients of each matched subfilter in the two matched filter banks are calculated based on following equations.

$$\xi_{p,1}(n) = e^{-j2\pi\left[h_1\gamma_k q(nT_s-(m-1)T)+h_2\gamma_l q(nT_s-mT)\right]}, \; floor\left((m+\frac{1}{2})\frac{T}{T_s}\right) \le n \le floor\left((m+\frac{3}{2})\frac{T}{T_s}\right)$$

$$\xi_{p,2}(n) = e^{-j2\pi\left[h_2\gamma_k q(nT_s-(m-1)T)+h_1\gamma_l q(nT_s-mT)\right]}, \; floor\left((m+\frac{1}{2})\frac{T}{T_s}\right) \le n \le floor\left((m+\frac{3}{2})\frac{T}{T_s}\right)$$

$m$ is a variable for counting symbol durations, and has an initial value of 0. Operations of adding one is performed on $m$ based on a pulse signal for symbol synchronization outputted by a code NCO. Namely, an operation of $m = m + 1$ is performed in a case that there is a signal of a pulse for symbol synchronization.

There is $p = (k-1)\times M + l$, where $k$ =1, 2, ..., $M$, and $l$=1, 2, ..., $M$.

$\xi_{p,1}(n)$ is a filter coefficient of a $p$-th matched subfilter in the first matched filter bank.

$\xi_{p,2}(n)$ is a filter coefficient of a $p$-th matched subfilter in the second matched filter bank.

$\gamma_k$ and $\gamma_l$ are preset symbols in a $M$-nary symbol system. $k$ and $l$ are sequence numbers of the symbols. There are $\gamma_k = 2(k-1)-(M-1)$ and $\gamma_l = 2(l-1)-(M-1)$, where $k$ =1, 2, ..., M and $l$ =1, 2, ..., $M$. In the ARTM CPM, the M-nary number of the symbol system is 4, thereby there are $\gamma_1$ =-3, $\gamma_2$ =-1, $\gamma_3$ =1 and $\gamma_4$ = 3.

$q(t)$ is a preset phase pulse function. $q(nT_s - mT)$ is a sampling value of $q(t)$ at $t = nT_s - mT$, $q(nT_s - (m-1)T)$ is a sampling value of $q(t)$ at $t = nT_s - (m-1)T$. The phase pulse function $q(t)$ is expressed as follows.

$$q(t) = \begin{cases} 0, & t \le 0 \\ \int_0^t g(\tau)d\tau, & 0 < t \le LT \\ 1/2, & t > LT \end{cases}$$

$g(t)$ is a pulse shaping function. There is:

$$g(t) = \begin{cases} \dfrac{1}{2LT}\left[1-\cos\left(2\pi t/LT\right)\right], & 0 \le t \le LT \\ 0 & , \; else \end{cases}$$

$L$ is a correlation length. In the ARTM CPM, the correlation length $L$ is 3.

### (2.2) Calculation for Matched Filtering

For each discrete moment $n$, $P$ matched subfilters in one of the filter banks are selected among the two filter banks, based on the variable $m$ for counting symbol durations at current moment, to perform the matched filtering on the baseband signal of each branch. The $P$ matched filtering results are outputted.

Each matched subfilter performs the matched filtering on the baseband signal. A corresponding equation for filtering calculation is as follows.

$$u(m) = \sum_{n=floor\left[(m+\frac{1}{2})\frac{T}{T_s}\right]}^{floor\left[(m+\frac{3}{2})\frac{T}{T_s}\right]} f(n)\xi(n)$$

$u(m)$ is the matched filtering results obtained by performing the matched filtering process on the baseband signal via the matched subfilter. $f(n)$ is the baseband signal to be filtered. $\xi(n)$ is a filtering coefficient of the matched subfilter.

According to the above equation for matched filtering calculation, it can be determined as follows.

The matched filtering is performed on the E-branch baseband signal $f(n)$ to obtain an E-branch matched-filtering-result vector $\mathbf{U}(m)$. There is:

$$\mathbf{U}(m) = [u_1(m) \quad u_2(m) \quad \cdots \quad u_p(m) \quad \cdots \quad u_P(m)].$$

The matched filtering is performed on the I-branch baseband signal $f'(n)$ to obtain an I-branch matched-filtering-result vector $\mathbf{U}'(m)$. There is:

$$\mathbf{U}'(m) = [u_1'(m) \quad u_2'(m) \quad \cdots \quad u_p'(m) \quad \cdots \quad u_P'(m)].$$

The matched filtering is performed on the L-branch baseband signal $f''(n)$ to obtain an L-branch matched-filtering-result vector $\mathbf{U}''(m)$. There is:

$$\mathbf{U}''(m) = [u_1''(m) \quad u_2''(m) \quad \cdots \quad u_p''(m) \quad \cdots \quad u_P''(m)].$$

In case of mod(m, 2) = 0, the first matched filter bank is selected for the matched filtering. There are:

$$u_p(m) = \sum_{n=floor\left[(m+\frac{1}{2})\frac{T}{T_s}\right]}^{floor\left[(m+\frac{3}{2})\frac{T}{T_s}\right]} f(n)\xi_{p,1}(n);$$

$$u_p'(m) = \sum_{n=floor\left[(m+\frac{1}{2})\frac{T}{T_s}\right]}^{floor\left[(m+\frac{3}{2})\frac{T}{T_s}\right]} f'(n)\xi_{p,1}(n);$$

and

$$u_p''(m) = \sum_{n=floor\left[(m+\frac{1}{2})\frac{T}{T_s}\right]}^{floor\left[(m+\frac{3}{2})\frac{T}{T_s}\right]} f''(n)\xi_{p,1}(n).$$

In case of mod($m,2$) =1, the second matched filter bank is selected for the matched filtering. There are:

$$u_p(m) = \sum_{n=floor\left[(m+\frac{1}{2})\frac{T}{T_s}\right]}^{floor\left[(m+\frac{3}{2})\frac{T}{T_s}\right]} f(n)\xi_{p,2}(n);$$

$$u'_p(m) = \sum_{n=floor\left[(m+\frac{1}{2})\frac{T}{T_s}\right]}^{floor\left[(m+\frac{3}{2})\frac{T}{T_s}\right]} f'(n)\xi_{p,2}(n)$$

; and

$$u''_p(m) = \sum_{n=floor\left[(m+\frac{1}{2})\frac{T}{T_s}\right]}^{floor\left[(m+\frac{3}{2})\frac{T}{T_s}\right]} f''(n)\xi_{p,2}(n).$$

There is $p$ =1, 2, ..., $P$.

### (3) Phase Compensation

In the step, the phase compensation is performed on the matched filtering results of the three branches based on a following equation for phase compensation.

$$v(m) = u(m)e^{-j\delta(m)}$$

$v(m)$ is an output result of phase compensation. $u(m)$ is the the matched filtering result to be compensated. $\delta(m)$ is a titled phase difference corresponding to an $m$-th symbol duration. $\delta(m)$ is recursively updated based on the modulation index corresponding to the symbol duration. A specific equation for recursively updating the tilted phase difference $\delta(m)$ is as follows.

$$\delta(m) = \delta(m-1) + 3\pi h'_{m-1}$$

$\delta(m$ -1) is a tilted phase difference corresponding to the ($m$-1)-th symbol duration. An initial value $\delta(0)$ of the tilted phase difference is zero. $h'_{m-1}$ is the modulation index corresponding to the $m$-th symbol duration. There is $h'_{m-1} = h_1$ in case of mod($m$ -1,2) = 0, and there is $h'_{m-1} = h_2$ in case of mod($m$ -1,2) = 1. $h_1$ and $h_2$ are the preset first modulation index and the preset second modulation index, respectively.

According to the aforementioned method for phase compensation, the phase compensation is performed on U(m) to obtain an E-branch phase-compensation-output vector $\mathbf{V}(m)$. There is $\mathbf{V}(m) = [v_1(m)\ v_2(m)\ \cdots\ v_p(m)\ \cdots\ v_P(m)]$. The phase compensation is performed on $\mathbf{U}'(m)$ to obtain an I-branch phase-compensation-output vector $\mathbf{V}'(m)$. There is $\mathbf{V}'(m) = [v'_1(m)\quad v'_2(m)\quad \cdots\quad v'_p(m)\quad \cdots\quad v'_P(m)]$. The phase compensation is performed on $\mathbf{U}''(m)$ to obtain an E-branch phase-compensation-output vector $\mathbf{V}''(m)$. There is $\mathbf{V}''(m) = [v''_1(m)\quad v''_2(m)\quad \cdots\quad v''_p(m)\quad \cdots\quad v''_P(m)]$. There are:

$$v_p(m) = u_p(m)e^{-j\delta(m)};$$

$$v'_p(m) = u'_p(m)e^{-j\delta(m)};$$

and

$$v''_p(m) = u''_p(m)e^{-j\delta(m)}.$$

There is $p$ =1, 2, ..., $P$.

**(4) Viterbi Demodulation**

In the step, Viterbi demodulation is performed on the I-branch phase-compensation-output vector **V'**($m$) to obtain demodulated data and a synchronous demodulation state.
As shown in Figure 2, steps of the Viterbi demodulation according to the present disclosure include calculation of branch metrics, update of path metrics, determination of a survivor path, and acquisition of a demodulation result. Specific illustrations for the steps are as follows.

**(4.1) Calculation of Branch Metrics**

In the step, the branch metrics are calculated based on the I-branch phase-compensation-output vector **V'**($m$). Namely, in the $m$-th symbol duration, for each of the $W \times M$ states, branch metrics of $M$ branches entering such state is calculated. A specific equation for calculating the branch metric is as follows.

$$\beta_{S_{w',k',i}}(m) = \mathrm{Re}\left\{ v'_{p_i}(m) \times e^{-j2\pi\frac{w_i-1}{W}} \right\}$$

$\beta_{S_{w',k',i}}(m)$ is a branch metric of an $i$-th branch entering a state $S_{w',k'}$ in the $m$-th symbol duration. **Re** represents a function for taking a real part. The $i$-th branch corresponds to a state $S_{w_i,k_i}$ in the ($m$-1)-th symbol duration. Namely, the state $S_{w_i,k_i}$ in the ($m$-1)-th symbol duration enters the state $S_{w',k'}$ in the $m$-th symbol duration via the $i$-th branch. There are $w'$=1, 2, ..., $W$, $k'$ = 1, 2 ..., $M$, and $i$ = 1, 2, ..., $M$. A corresponding relationship among $w_i$, $k_i$ and $w'$ is:

$$w' = \mathrm{mod}\left( (w_i - 1) + (k_i - 1) \times h'_m \times W, W \right) + 1.$$

There are $w_i \in \{1,2,3,...,W\}$ and $k_i \in \{1,2,3,...,M\}$. $h'_m$ is the modulation index corresponding to the $m$-th symbol duration. There is $h'_m = h_1$ in case of mod(m, 2) = 0. There is $h'_m = h_2$ in case of mod(m, 2) =1. $v'_{p_i}(m)$ is a $p_i$-th phase compensation result in the I-branch phase-compensation-output vector **V'**($m$). There is $p_i$ = ($k_i$ -1)$\times$M + $k'$.
$W$ is a preset quantity of simplified phase states. In a specific embodiment of the present disclosure, there is $W$ =16.
Hereinafter an example is taken to illustrate a state transition relationship between two adjacent symbol durations.
For a state $S_{15,2}$ in the $m$-th symbol duration, namely, there are $w'$=15, $k'$=2, a total of $M$ =4 branches enter such state, and the four branches correspond to 4 states in the ($m$-1)-th symbol duration.
Hereinafter it is preset $h_1$ = 4/16 and $h_2$ = 5/16 in all the examples.
In case of mod($m$,2) = 0, four sets of solutions satisfying the equation

$$w' = \text{mod}\left((w_i - 1) + (k_i - 1) \times \frac{4}{16} \times W, W\right) + 1$$

are: $w_1 = 3$, $k_1 = 4$; $w_2 = 7$, $k_2 = 3$; $w_3 = 11$, $k_3 = 2$; and $w_4 = 15$, $k_4 = 1$. Namely, the four branches entering the state $S_{15,2}$ in the $m$-th symbol duration are states $S_{3,4}$, $S_{7,3}$, $S_{11,2}$ and $S_{15,1}$, respectively, in the $(m$-1)-th symbol duration.

In case of mod($m$,2) =1, four sets of solutions satisfying the equation

$$w' = \text{mod}\left((w_i - 1) + (k_i - 1) \times \frac{5}{16} \times W, W\right) + 1$$

are: $w_1 = 5$, $k_1 = 3$; $w_2 = 10$, $k_2 = 2$; $w_3 = 15$, $k_3 = 1$; and $w_4 = 16$, $k_4 = 4$. Namely, the four branches entering the state $S_{15,2}$ in the $m$-th symbol duration are states $S_{5,3}$, $S_{10,2}$, $S_{15,1}$ and $S_{16,4}$, respectively, in the $(m$-1)-th symbol duration.

## (4.2) Update of Path Metrics

In the step, $M$ path metrics for each state in the $m$-th symbol duration are updated by calculating according to the branch metrics calculated in (4.1). A equation for calculating the path metric is as follows.

$$\lambda_{S_{w',k',i}}(m) = \lambda'_{S_{w_i,k_i}}(m-1) + \beta_{S_{w',k',i}}(m)$$

$\lambda_{S_{w',k',i}}(m)$ is a path metric corresponding to the $i$-th branch entering the state $S_{w',k'}$ in the $m$-th symbol duration. $\beta_{Sw',k',i}(m)$ is the branch metric of the $i$-th branch. The $i$-th branch corresponds to the state $S_{w_i,k_i}$ in the $(m$-1)-th symbol duration. $\lambda'_{S_{w_i,k_i}}(m-1)$ is the survivor path metric of the state $S_{wi,ki}$ in the $(m$-1)-th symbol duration. An initial value $\lambda'_{S_{w_i,k_i}}(0)$ is zero. There are $w'$=1, 2, ..., $W$, $k'$ = 1, 2 ..., $M$, and $i$ = 1, 2, ..., $M$. A corresponding relationship among $w_i$, $k_i$ and $w'$ is:

$$w' = \text{mod}\left((w_i - 1) + (k_i - 1) \times h'_m \times W, W\right) + 1.$$

There are $w_i \in \{1,2,3,...,W\}$ and $k_i \in \{1,2,3,...,M\}$. $h'_m$ is the modulation index corresponding to the $m$-th symbol duration. There is $h'_m = h_1$ in case of mod(m, 2) = 0. There is $h'_m = h_2$ in case of mod($m$, 2) =1.

(4.3) Determination of Survivor Path and Survivor Path Metric

In the step, the survivor path and a survivor path metric for each state in the $m$-th symbol duration are determined, and the survivor path and the survivor path metric for each state are saved. A specific method for determining the survivor path and the survivor path metric is as follows.

For the state $S_{w',k'}$ in the $m$-th symbol duration, a maximum one among the $M$ path metrics corresponding to the state $S_{w',k'}$ is selected as the survivor path metric $\lambda'_{S_{w',k'}}(m)$ for the state $S_{w',k'}$. Namely, there is $\lambda'_{S_{w',k'}}(m) = \max_{i}(\lambda_{S_{w',k',i}}(m))$. $\lambda'_{S_{w',k'}}(m)$ is the $i$-th path metric corresponding to the state $S_{w',k'}$ in the m-th symbol duration, and there is $i$=1, 2, ..., $M$. A path corresponding to the survivor path metric $\lambda'_{S_{w',k'}}(m)$ is determined as the survivor path of the state $S_{w',k'}$ in the $m$-th symbol duration. There are $w'$=1, 2, ..., $W$ and $k'$ = 1, 2, ..., $M$.

### (4.4) Acquisition of Demodulation Result

In the step, steps (4.1), (4.2), and (4.3) are repeatedly performed for each symbol duration that elapses. In a case that there is $m \geq D_1$ or $m \geq D_2$, operations of demodulation backtracking and synchronous demodulation backtracking are required to be performed. $D_1$ is a preset backtracking length for demodulation, and $D_2$ is a preset backtracking length for synchronous demodulation. $D_2$ is generally preset to be smaller than $D_1$.

First, the survivor state of the $m$-th symbol duration is determined. A specific determination method is as follows. Among the states $S_{w',k}$, ($w'$=1, 2, ..., $W$, $k'$= 1, 2, ..., $M$) corresponding to the $m$-th symbol duration, a state corresponding to a maximum one of the survivor path metrics is selected as the survivor state of the $m$-th symbol duration. Then, the survivor state of the $m$-th symbol duration is determined to be a starting point for backtracking, and demodulation backtracking and synchronous demodulation backtracking are performed, respectively.

In case of $m \geq D_2$, the synchronous demodulation backtracking is performed. A specific process of backtracking is as follows. The survivor state of the m-th symbol duration as the starting point for backtracking. $D_2$ symbols are sequentially backtracked across according to the survivor path of the corresponding state in each symbol duration that is saved in the step 4.3, to reach a state $S_{w'_{tb},k'_{tb}}$ of an ($m$ - $D_2$)-th symbol duration. The state $S_{w'_{tb},k'_{tb}}$ is determined as the synchronous demodulation state. Finally, timing error and phase synchronization error are calculated based on the synchronous demodulation state and the survivor path of such state.

In case of $m \geq D_1$, the demodulation backtracking is further required. A specific process of backtracking is as follows. The survivor state of the $m$-th symbol duration as the starting point for backtracking. $D_1$ symbols are sequentially backtracked across according to the survivor path of the corresponding state in each symbol duration that is saved in the step 4.3, to reach a state $S_{w'_{jt},k'_{jt}}$ of an ($m$ - $D_1$)-th symbol duration. The state $S_{w'_{jt},k'_{jt}}$ is determined as a demodulation state. The demodulated data is determined based on the demodulation state. Namely, the demodulated data is $\alpha(m$ - $D_1) = k_{jt}'$ -1, and values of $k_{jt}'$-1 are in a one-to-one correspondence to symbols of ARTM CPM.

In the aforementioned backtracking, the length $D_1$ for demodulation backtracking and the length $D_2$ for synchronization demodulation backtracking are determined according to preset requirements of data decision accuracy and a demodulation delay. $D_1$ and $D_2$ are proportional to data decision accuracy and demodulation delay. Namely, the smaller the backtracking length is, the lower the data decision accuracy is; and the larger the backtracking length is, the higher the data decision accuracy is, and the larger the demodulation delay is. Generally, it is preset $D_1$=10 and $D_2$=1 as a compromise in a specific embodiment of the present disclosure.

### (5) Calculation of Timing Error and Phase Error

In the step, a timing error $e_\tau(m)$ and a carrier phase error $e_\varphi(m)$ are calculated based on $\mathbf{V}(m)$, $\mathbf{V}'(m)$, $\mathbf{V}''(m)$, the synchronous demodulation state obtained from the Viterbi demodulation, and the survivor path of the synchronous demodulation state. Specific equations for calculation are as follows.

$$e_\tau(m) = \mathrm{Re}\left\{ e^{-j2\pi\frac{w_o-1}{W}} \left( v''_{p_o}(m) - v_{p_o}(m) \right) \right\}$$

$$e_\varphi(m) = \mathrm{Im}\left\{ e^{-j2\pi\frac{w_o-1}{W}} v'_{p_o}(m) \right\}$$

The synchronous demodulation state is $S_{w'_{tb},k'_{tb}}$. The survivor path of the state $S_{w'_{tb},k'_{tb}}$ corresponds to a state $S_{w_{tb},k_{tb}}$ in a previous symbol duration. There is $w_o = w_{tb}$, and $p_o = (k_{tb} - 1) \times M + k'_{tb}$. $v_{po}(m)$ is the $p_o$-th phase-compensation-output result in $\mathbf{V}(m)$. $v'_{p_o}(m)$ is the $p_o$-th phase-compensation-output result in $\mathbf{V}'(m)$. $v''_{p_o}(m)$ is the $p_o$-th phase-compensation-output result in $\mathbf{V}''(m)$. **Re** represents a function for taking a real part. **Im** represents a function for taking an imaginary part.

**(6) Update for Code NCO and Carrier NCO**

In the step, loop filtering is performed on the timing error $e_\tau(m)$ and the carrier phase error $e_\varphi(m)$, respectively. The code NCO and the carrier NCO are adjusted according to results of the loop filtering on the timing error $e_\tau(m)$ and the carrier phase error $e_\varphi(m)$.

Code loop filtering is performed on the timing error $e_\tau(m)$ to obtain an amount for phase adjustment, and the amount for phase adjustment is outputted to the code NCO. A phase of the pulse signal for symbol synchronization is adjusted by the code NCO according to the amount for phase adjustment. The matched filter for the next symbol duration is performed under the control of the pulse signal for symbol synchronization. The symbol timing synchronization is achieved after the processing is cycled for multiple times.

Carrier loop filtering is performed on the carrier phase error $e_\varphi(m)$ to obtain an amount for phase adjustment, and the amount for phase adjustment is outputted to the carrier NCO. A phase of the carrier signal is adjusted by the carrier NCO according to the amount for phase adjustment. Frequency mixing is performed on the the adjusted carrier signal and a next sample value of the received signal. The carrier phase synchronization is achieved after the processing is cycled for multiple times.

The steps (1) to (6) are repeated, and thereby demodulation and synchronization of the signal can be achieved.

**Embodiment:**

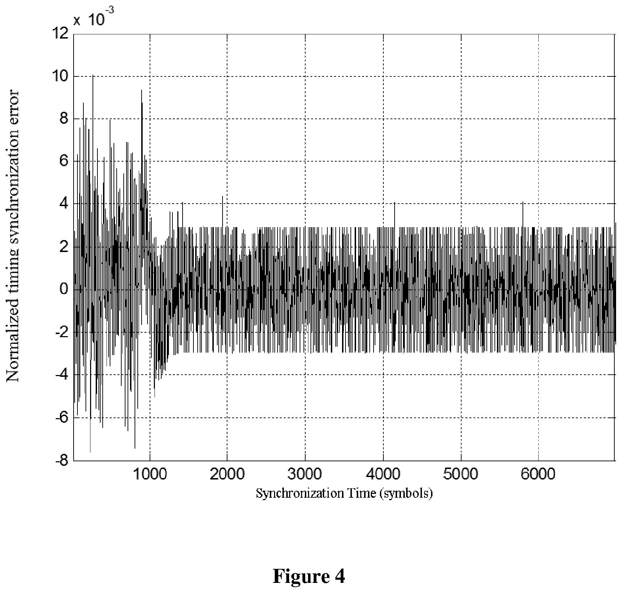

In the embodiment, it is preset that the symbol rate $R$ of signal is 10MHz and the sampling frequency $f_s$ is 100MHz. Namely, the corresponding sampling period $T_s$ is 10ns as there is $T_s = 1/f_s$, and the symbol duration $T$ is 100ns as there is $T = 1/R$. A nominal frequency $f_c$ of the carrier is preset to be 70MHz, and a quantity of bits for quantizing the code NCO and the carrier NCO is 32. The method for implementing demodulation and synchronization with low complexity in ARTM CPM is applied for processing according to the present disclosure. As a result, the curve of demodulation error performance is shown in Figure 3, and the curve of timing synchronization tracking is shown in Figure 4. The normalized timing synchronization error denoted by the Y-axis of Figure 4 refers to normalized timing synchronization error with respect to the code NCO.

Content that belong to common knowledge to those skilled in the art is not described in detail in the description of the present disclosure.

**Claims**

1. A method for implementing demodulation and synchronization with low complexity in Advanced Range Telemetry continuous phase modulation, ARTM CPM, comprising:

    step 1, comprising:

        delaying a received signal $r(n)$ by $T_s$ to obtain a first-order delayed signal $r'(n)$,
        delaying the received signal $r(n)$ by $2T_s$ to obtain a second-order delayed signal $r''(n)$, and
        performing frequency mixing and low-pass filtering on $r(n)$, $r'(n)$, and $r''(n)$, respectively, to obtain an E-branch baseband signal $f(n)$, an I-branch baseband signal $f'(n)$ and an L-branch baseband signal $f''(n)$, wherein $T_s$ is a preset sampling period, and a local frequency of a carrier in the frequency-mixing is controlled by a carrier numerically controlled oscillator, NCO;

    step 2, performing matched filtering on the $f(n)$, $f'(n)$ and $f''(n)$ by alternately using two matched filter banks, to obtain an E-branch matched-filtering-result vector $\mathbf{U}(m)$, an I-branch matched-filtering-result vector $\mathbf{U}'(m)$, and an L-branch matched-filtering-result vector $\mathbf{U}''(m)$, respectively, wherein:

        each of the two matched filter banks comprises $P$ matched subfilters;
        the $P$ matched subfilters perform matched filtering on each of the baseband signals to output a matched-filtering-result vector that comprises $P$ matched filtering results, and $\mathbf{U}(m)$, $\mathbf{U}'(m)$, and $\mathbf{U}''(m)$ are the matched-filtering-result vectors;
        $m$ is a variable for counting symbol durations, operations of adding one is performed on $m$ based on a pulse signal for symbol synchronization outputted by a code NCO, and $m$ has an initial value of 0;
        $P = M^2$, wherein $M$ is a preset size of a symbol alphabet of a symbol system; and

performing matched filtering on the $f(n)$, $f'(n)$ and $f''(n)$ by alternately using two matched filter banks comprises: using the first matched filter bank for the matched filtering on the three branches in case of $\mathrm{mod}(m, 2) = 0$, and using the second matched filter bank for the matched filtering on the three branches in case of $\mathrm{mod}(m, \backslash 2) = 1$;

step 3, performing phase compensation on the $\mathbf{U}(m)$, $\mathbf{V}'(m)$ and $\mathbf{U}''(m)$, to obtain an E-branch phase-compensation-output vector $\mathbf{V}(m)$, an I-branch phase-compensation-output vector $\mathbf{V}'(m)$ and an L-branch phase-compensation-output vector $\mathbf{V}'(m)$, respectively;

step 4, performing Viterbi demodulation on the I-branch phase-compensation-output vector $\mathbf{V}'(m)$ to obtain demodulated data and a synchronous demodulation state;

step 5, calculating a timing error $e_\tau(m)$ and a carrier phase error $e_\varphi(m)$, based on $\mathbf{V}(m)$, $\mathbf{V}'(m)$, $\mathbf{V}''(m)$ and the synchronous demodulation state;

step 6, comprising:

performing loop filtering on the timing error $e_\tau(m)$ and the carrier phase error $e_\varphi(m)$, respectively, and adjusting the code NCO and the carrier NCO according to results of the loop filtering on the timing error $e_\tau(m)$ and the carrier phase error $e_\varphi(m)$; and

step 7, repeating the step 1 to the step 6 to implement demodulation and synchronization on the received signal.

2. The method for implementing demodulation and synchronization with low complexity in ARTM CPM according to claim 1, wherein in the step 2, filter coefficients of the matched subfilters in the two matched filter banks are calculated based on:

$$\xi_{p,1}(n) = e^{-j2\pi\left[h_1\gamma_k q(nT_s-(m-1)T)+h_2\gamma_l q(nT_s-mT)\right]}, floor\left((m+\frac{1}{2})\frac{T}{T_s}\right) \le n \le floor\left((m+\frac{3}{2})\frac{T}{T_s}\right);$$

and

$$\xi_{p,2}(n) = e^{-j2\pi\left[h_2\gamma_k q(nT_s-(m-1)T)+h_1\gamma_l q(nT_s-mT)\right]}, floor\left((m+\frac{1}{2})\frac{T}{T_s}\right) \le n \le floor\left((m+\frac{3}{2})\frac{T}{T_s}\right),$$

wherein:

$\xi_{p,1}(n)$ is a filter coefficient of a $p$-th matched subfilter in a first matched filter bank, $\xi_{p,2}(n)$ is a filter coefficient of a $p$-th matched subfilter in a second matched filter bank, and $p = (k-1)\times M + l$;

$q(t)$ is a preset phase pulse function, $q(nT_s - mT)$ is a sampling value of $q(t)$ at $t = nT_s - mT$, $q(nT_s - (m-1)T)$ is a sampling value of $q(t)$ at $t = nT_s - (m-1)T$, and $T$ is the preset symbol duration;

$$\gamma_k = 2(k-1)-(M-1),\ \ \gamma_l = 2(l-1)-(M-1), k=1, 2, ..., M, l=1, 2, ..., M;$$

and

$h_1$ and $h_2$ are a preset first modulation index and a preset second modulation index, respectively, and *floor* represents a round-down function.

3. The method for implementing demodulation and synchronization with low complexity in ARTM CPM according to claim 1 or 2, wherein in the step 2, the matched subfilter performs the matched filtering on the baseband signal, and the matched filtering is based on:

$$u(m) = \sum_{n=floor\left[(m+\frac{1}{2})\frac{T}{T_s}\right]}^{floor\left[(m+\frac{3}{2})\frac{T}{T_s}\right]} f(n)\xi(n),$$

wherein $u(m)$ is the matched filtering results obtained by performing the matched filtering process on the baseband signal via the matched subfilter, $f(n)$ is a baseband signal to be filtered, and $\xi(n)$ is a filtering coefficient of the matched subfilter, $T$ is the preset symbol duration, and *floor* represents the round-down function.

4. The method for implementing demodulation and synchronization with low complexity in ARTM CPM according to claim 1 or 2, wherein in the step 3, the phase compensation is based on:

$$v(m) = u(m)e^{-j\delta(m)};$$

wherein $v(m)$ is an output result of phase compensation, $u(m)$ is the matched filtering result to be compensated, $\delta(m)$ is a tilted phase difference corresponding to an $m$-th symbol duration, and $\delta(m)$ is recursively updated based on the modulation index corresponding to the symbol duration.

5. The method for implementing demodulation and synchronization with low complexity in ARTM CPM according to claim 4, wherein in the phase compensation, the tilted phase difference $\delta(m)$ is recursively updated based on:

$$\delta(m) = \delta(m-1) + 3\pi h'_{m-1},$$

wherein $\delta(m\text{-}1)$ is a tilted phase difference corresponding to the $(m\text{-}1)$-th symbol duration, and an initial value $\delta(0)$ of the tilted phase difference is zero; and

wherein $h'_{m-1}$ is the modulation index corresponding to the $m$-th symbol duration, there is $h'_{m-1} = h_1$ in case of mod(m -1,2) = 0 and $h'_{m-1} = h_2$ in case of mod($m$-1,2) =1, and $h_1$ and $h_2$ are the preset first modulation index and the preset second modulation index, respectively.

6. The method for implementing demodulation and synchronization with low complexity in ARTM CPM according to claim 1 or 2, wherein in the step 4, the Viterbi demodulation is performed on the I-branch phase-compensation-output vector **V**'($m$), and the Viterbi demodulation comprises:

step 4a, calculating branch metrics based on **V**'($m$), wherein the branch metrics of $M$ branches entering each state are calculated in the $m$-th symbol duration;
step 4b, calculating $M$ path metrics for each state in the $m$-th symbol duration based on the branch metrics calculated in the step 4a;
step 4c, determining a survivor path and a survivor path metric for each state in the m-th symbol duration, and saving the survivor path and the survivor path metric for each state; and
step 4d, determining a survivor state of the $m$-th symbol duration, and

backtracking from the survivor state being a backtracking starting point according to the surviving path saved in the step 4c, in case of $m \geq D_1$ or $m \geq D_2$;
wherein $D_1$ symbols are backtracked across to obtain the demodulated data in case of $m \geq D_1$, $D_2$ symbols are backtracked across to obtain the synchronous demodulation state in case of that $m \geq D_2$, $D_1$ is a preset backtracking length for demodulation, and $D_2$ is a preset backtracking length for synchronous demodulation.

7. The method for implementing demodulation and synchronization with low complexity in ARTM CPM according to claim 6, wherein in the step 4a, the branch metrics are calculated based on:

$$\beta_{S_{w',k',i}}(m) = \text{Re}\left\{ v'_{p_i}(m) \times e^{-j2\pi\frac{w_i-1}{W}} \right\};$$

wherein:

$\beta_{S_{w',k',i}}(m)$ is a branch metric of an $i$-th branch entering a state $S_{w',k'}$ in the $m$-th symbol duration, the $i$-th branch corresponds to a state $S_{w_i,k_i}$ in the ($m$-1)-th symbol duration, and the state $S_{w_i,k_i}$ in the ($m$-1)-th symbol duration enters the state $S_{w',k'}$ in the $m$-th symbol duration via the $i$-th branch;

$w'$=1, 2, ..., $W$, $k'$ = 1, 2 ..., $M$, $i$ = 1, 2, ..., $M$, **Re** represents a function for taking a real part, and $W$ is a preset quantity of simplified phase states;

$v'_{p_i}(m)$ is a $p_i$-th phase compensation result in the I-branch phase-compensation-output vector $\mathbf{V}'(m)$ and $p_i = (k_i -1)\times M + k'$; and

a corresponding relationship among $w_i$, $k_i$ and $w'$ is:

$$w' = \text{mod}\left((w_i-1)+(k_i-1)\times h'_m \times W, W\right)+1;$$

wherein $w_i \in \{1,2,3,...,W\}$, $k_i \in \{1,2,3,...,M\}$, $h'_m$ is the modulation index corresponding to the $m$-th symbol duration, $h'_m = h_1$ in case of mod(m, 2) = 0 , $h'_m = h_2$ in case of mod(m, 2) =1, and $h_1$ and $h_2$ are the preset first modulation index and the preset second modulation index, respectively.

8. The method for implementing demodulation and synchronization with low complexity in ARTM CPM according to claim 6, wherein in the step 4b, the path metrics are calculated based on:

$$\lambda_{S_{w',k',i}}(m) = \lambda'_{S_{w_i,k_i}}(m-1)+\beta_{S_{w',k',i}}(m);$$

wherein:

$\lambda_{S_{w',k',i}}(m)$ is a path metric corresponding to the $i$-th branch entering the state $S_{w',k'}$ in the m-th symbol duration;
$\beta_{Sw',k',i}(m)$ is the branch metric of the $i$-th branch, the $i$-th branch corresponds to the state $S_{wi,ki}$ in the ($m$-1)-th symbol duration, and the state $S_{wi,ki}$ in the ($m$-1)-th symbol duration enters the state $S_{w',k'}$ in the $m$-th symbol duration via the $i$-th branch;

$\lambda'_{S_{w_i,k_i}}(m-1)$ is the survivor path metric of the state $S_{wi,ki}$ in the ($m$-1)-th symbol duration, and an initial value $\lambda'_{S_{w_i,k_i}}(0)$ is zero;

$w'$=1, 2, ..., W, $k'$ = 1, 2, ..., M, $i$ = 1, 2, ..., M, and W is a preset quantity of simplified phase states; and
a corresponding relationship among $w_i$, $k_i$ and $w'$ is:

$$w' = \text{mod}\left((w_i-1)+(k_i-1)\times h'_m \times W, W\right)+1;$$

wherein $w_i \in \{1,2,3,...,W\}$, $k_i \in \{1,2,3,...,M\}$, $h'_m$ is the modulation index corresponding to the $m$-th symbol duration, $h'_m = h_1$ in case of mod($m$, 2) = 0, $h'_m = h_2$ in case of mod($m$,2) =1, and $h_1$ and $h_2$ are the preset first modulation index and the preset second modulation index, respectively.

9. The method for implementing demodulation and synchronization with low complexity in ARTM CPM according to claim 6, wherein in the step 4c, the survivor path and the survivor path metric is determined by:

selecting, for the state $S_{w',k'}$ in the $m$-th symbol duration, a maximum one among the $M$ path metrics corresponding to the state $S_{w',k'}$ as the survivor path metric $\lambda'_{S_{w',k'}}(m)$ for the state $S_{w',k'}$, wherein $\lambda'_{S_{w',k'}}(m) = \max_{i}(\lambda_{S_{w',k',i}}(m))$, $\lambda'_{S_{w',k'}}(m)$ is the $i$-th path metric corresponding to the state $S_{w',k'}$ in the $m$-th symbol duration, $i$=1, 2, ..., $M$; and

determining a path corresponding to the survivor path metric $\lambda'_{S_{w',k'}}(m)$ as the survivor path of the state $S_{w',k'}$ in the $m$-th symbol duration, wherein $w'$=1, 2, ..., $W$, $k'$ = 1, 2, ..., $M$, and $W$ is a preset quantity of simplified phase states.

10. The method for implementing demodulation and synchronization with low complexity in ARTM CPM according to claim 6, wherein in the step 4d, the survivor state of the $m$-th symbol duration is determined by:
selecting, among all states corresponding to the $m$-th symbol duration, a state corresponding to a maximum one of the survivor path metrics as the survivor state of the $m$-th symbol duration.

11. The method for implementing demodulation and synchronization with low complexity in ARTM CPM, according to claim 6, wherein the step 4d, backtracking across the $D_1$ to obtain the demodulated data in case of $m \geq D_1$ comprises:

determining the survivor state of the $m$-th symbol duration to be a starting point for backtracking;
backtracking across the $D_1$ symbols in sequence, according to the survivor path of the corresponding state in each symbol duration that is saved in step 4c, to reach a state $S_{w'_{jt},k'_{jt}}$ of an ($m$ - $D_1$)-th symbol duration;
determining the state $S_{w'_{jt},k'_{jt}}$ as the demodulation state; and
determining the demodulated data based on the demodulation state, wherein the demodulated data is
$\alpha(m - D_1) = k_{jt}' - 1$ , wherein values of $k_{jt}'$-1 are in a one-to-one correspondence to symbols of ARTM CPM;
wherein $w'_{jt} \in \{1,2,3,...,W\}$, $k'_{jt} \in \{1,2,3,...,M\}$ , and $W$ is a preset quantity of simplified phase states.

12. The method for implementing demodulation and synchronization with low complexity in ARTM CPM according to claim 6, wherein backtracking across the $D_2$ symbols to obtain the synchronous demodulation state in case of $m \geq D_2$ comprises:

determining the survivor state of the $m$-th symbol duration to be the starting point for backtracking;
backtracking across the $D_2$ symbols, according to the survivor path of the corresponding state in each symbol duration that is saved in the step 4c, to reach a state $S_{w'_{tb},k'_{tb}}$ of an ($m$ - $D_2$)-th symbol duration; and
determining the state $S_{w'_{tb},k'_{tb}}$ as the synchronous demodulation state;
wherein $w'_{tb} \in \{1,2,3,...,W\}$ , $k'_{tb} \in \{1,2,3,...,M\}$ , and $W$ is the preset number of simplified phase states.

13. The method for implementing demodulation and synchronization with low complexity in ARTM CPM according to claim 6, wherein in the step 4d, the length $D_1$ for demodulation backtracking and the length $D_2$ for synchronization demodulation backtracking are determined according to preset requirements of data decision accuracy and a demodulation delay, and $D_1$ and $D_2$ are proportional to the data decision accuracy and the demodulation delay.

14. The method for implementing demodulation and synchronization with low complexity in ARTM CPM, according to claim 1 or 2, wherein in the step 5, the timing error $e_\tau(m)$ and the carrier phase error $e_\varphi(m)$ are calculated based on:

$$e_{\tau}(m) = \text{Re}\left\{ e^{-j2\pi\frac{w_o-1}{W}} \left( v''_{p_o}(m) - v_{p_o}(m) \right) \right\}$$

and

$$e_{\varphi}(m) = \text{Im}\left\{ e^{-j2\pi\frac{w_o-1}{W}} v'_{p_o}(m) \right\},$$

wherein:

the synchronous demodulation state is $S_{w'_{tb},k'_{tb}}$, the survivor path of the state $S_{w'_{tb},k'_{tb}}$ corresponds to a state $S_{w_{tb},k_{tb}}$ in a previous symbol duration, $w_o = w_{tb}$, and $p_o = (k_{tb}-1)\times M + k'_{tb}$ ;

$v_{p_o}(m)$ is a $p_o$-th phase-compensation-output result in $\mathbf{V}(m)$, $v'_{p_o}(m)$ is the $p_o$-th phase-compensation-output result in $\mathbf{V}'(m)$, and $v''_{p_o}(m)$ is the $p_o$-th phase-compensation-output result in $\mathbf{V}''(m)$;

**Re** represents a function for taking a real part, and **Im** represents a function for taking an imaginary part; and

$w'_{tb} \in \{1,2,3,...,W\}$, $k'_{tb} \in \{1,2,3,...,M\}$ , $w_{tb} \in \{1,2,3,...,W\}$, $k_{tb} \in \{1,2,3,...,M\}$, and $W$ is a preset quantity of simplified phase states.

15. The method for implementing demodulation and synchronization with low complexity in ARTM CPM according to claim 1 or 2, wherein in the step 6,

code loop filtering is performed on the timing error $e_{\tau}(m)$ to obtain an amount for phase adjustment, the amount for phase adjustment is outputted to the code NCO, and a phase of the pulse signal for symbol synchronization is adjusted by the code NCO according to the amount for phase adjustment; and/or

carrier loop filtering is performed on the carrier phase error $e_{\varphi}(m)$ to output an amount for phase adjustment, the amount for phase adjustment is outputted to the carrier NCO, and the local frequency of the carrier outputted by the carrier NCO is adjusted by the carrier NCO according to the amount for phase adjustment.

**Patentansprüche**

1. Verfahren zum Implementieren von Demodulation und Synchronisation mit niedriger Komplexität bei kontinuierlicher Phasenmodulation in erweiterter Bereichstelemetrie, ARTM CPM, umfassend:

Schritt 1, umfassend:

Verzögern eines empfangenen Signals $r(n)$ um $T_s$, um ein verzögertes Signal erster Ordnung $r'(n)$ zu erlangen ,

Verzögern des empfangenen Signals $r(n)$ um $2T_s$, um ein verzögertes Signal zweiter Ordnung $r''(n)$ zu erlangen, und

Ausführen von Frequenzmischen und Tiefpassfiltern an $r(n)$, $r'(n)$ bzw. $r''(n)$, um ein E-Zweig-Basisbandsignal $f(n)$, ein I-Zweig-Basisbandsignal $f'(n)$ und ein L-Zweig-Basisbandsignal $f''(n)$ zu erlangen,

wobei $T_s$ eine voreingestellte Abtastperiode ist, und eine lokale Frequenz eines Trägers bei dem Frequenzmischen durch einen numerisch gesteuerten Trägeroszillator, NCO, gesteuert wird;

Schritt 2, Ausführen einer angepassten Filterung an dem $f(n)$, $f'(n)$ und $f''(n)$ durch abwechselndes Verwenden von zwei angepassten Filterbänken, um einen E-Zweig-Vektor mit angepasstem Filterungsresultat $\mathbf{U}(m)$, einen I-Zweig-Vektor mit angepasstem Filterungsresultat $\mathbf{U}'(m)$ bzw. einen L-Zweig-Vektor mit angepasstem Filterungsresultat $\mathbf{U}''(m)$ zu erlangen, wobei:

jeder der zwei angepassten Filterbänke $P$ angepasste Unterfilter umfasst;

die $P$ angepassten Unterfilter eine angepasste Filterung an jedem der Basisbandsignale ausführen, um einen Vektor mit angepassten Filterungsresultaten auszugeben, der $P$ angepasste Filterungsresultate umfasst, und $\mathbf{U}(m)$, $\mathbf{U}'(m)$ und $\mathbf{U}''(m)$ die Vektoren mit angepassten Filterungsresultaten sind;

$m$ eine Variable zum Zählen von Symboldauern ist, Operationen zum Addieren von eins an $m$ basierend auf einem Impulssignal ausgeführt wird, das durch einen Code NCO ausgegeben wird, und $m$ einen Anfangswert von 0 aufweist;

$P = M^2$, wobei $M$ eine voreingestellte Größe eines Symbolalphabets eines Symbolsystems ist; und

ein Ausführen einer angepassten Filterung an $f(n)$, $f'(n)$ und $f''(n)$ durch abwechselndes Verwenden von zwei angepassten Filterbänken Folgendes umfasst:

Verwenden der ersten angepassten Filterbank für die angepasste Filterung an den drei Zweigen im Fall von $\mathrm{mod}(m, 2) = 0$, und Verwenden der zweiten angepassten Filterbank für die angepasste Filterung an den drei Zweigen im Fall von $\mathrm{mod}(m, 2) = 1$;

Schritt 3, Ausführen von Phasenkompensation an dem $\mathbf{U}(m)$, $\mathbf{U}'(m)$ und $\mathbf{U}''(m)$, um einen E-Zweig-Phasenkompensation-Ausgangsvektor $\mathbf{V}(m)$, einen I-Zweig-Phasenkompensation-Ausgangsvektor $\mathbf{V}'(m)$ bzw. einen L-Zweig-Phasenkompensation-Ausgangsvektor $\mathbf{V}''(m)$ zu erlangen;

Schritt 4, Ausführen von Viterbi-Demodulation an dem I-Zweig-Phasenkompensation-Ausgangsvektor $\mathbf{V}'(m)$, um demodulierte Daten und einen synchronen Demodulationszustand zu erlangen;

Schritt 5, Berechnen eines Zeitfehlers $e_\tau(m)$ und eines Trägerphasenfehlers $e_\varphi(m)$ basierend auf $\mathbf{V}(m)$, $\mathbf{V}'(m)$, $\mathbf{V}''(m)$ und dem synchronen Demodulationszustand;

Schritt 6, umfassend:

Ausführen von Schleifenfilterung an dem Zeitfehler $e_\tau(m)$ bzw. dem Trägerphasenfehler $e_\varphi(m)$, und Einstellen des Code-NCO und des Träger-NCO entsprechend den Resultaten der Schleifenfilterung an dem Zeitfehler $e_\tau(m)$ und dem Trägerphasenfehler $e_\varphi(m)$; und

Schritt 7, Wiederholen von Schritt 1 bis Schritt 6, um Demodulation und Synchronisation an dem empfangenen Signal zu implementieren.

2. Verfahren zum Implementieren von Demodulation und Synchronisation mit niedriger Komplexität in ARTM CPM nach Anspruch 1, wobei in dem Schritt 2 Filterkoeffizienten der angepassten Unterfilter in den zwei angepassten Filterbänken basierend auf Folgendem berechnet werden:

$$\xi_{p,1}(n) = e^{-j2\pi\left[h_1\gamma_k\, q(nT_s-(m-1)T)+h_2\gamma_l\, q(nT_s-mT)\right]},\ floor\left((m+\tfrac{1}{2})\frac{T}{T_s}\right) \le n \le floor\left((m+\tfrac{3}{2})\frac{T}{T_s}\right);$$

und

$$\xi_{p,2}(n) = e^{-j2\pi\left[h_2\gamma_k\, q(nT_s-(m-1)T)+h_1\gamma_l\, q(nT_s-mT)\right]},\ floor\left((m+\tfrac{1}{2})\frac{T}{T_s}\right) \le n \le floor\left((m+\tfrac{3}{2})\frac{T}{T_s}\right),$$

wobei:

$\xi_{p,1}(n)$ ein Filterkoeffizient eines $p$-ten angepassten Unterfilters in einer ersten angepassten Filterbank ist, $\xi_{p,2}(n)$ ein Filterkoeffizient eines $p$-ten angepassten Unterfilters in einer zweiten angepassten Filterbank ist, und $p = (k - 1) \times M + l$;

$q(t)$ eine voreingestellte Phasenimpulsfunktion ist, $q(nT_s - mT)$ ein Abtastwert von $q(t)$ bei $t = nT_s - mT$ ist, $q(nT_s - (m - 1)T)$ ein Abtastwert von $q(t)$ bei $t = nT_s - (m - 1)T$ ist, und $T$ die voreingestellte Symboldauer ist;

$$\gamma_k = 2(k - 1) - (M - 1),\ \gamma_l = 2(l - 1) - (M - 1),\ k = 1, 2, ..., M,\ l = 1, 2, ..., M;$$

und

$h_1$ und $h_2$ ein voreingestellter erster Modulationsindex bzw. ein voreingestellter zweiter Modulationsindex sind, und *floor* eine Abrundungsfunktion ist.

3. Verfahren zum Implementieren von Demodulation und Synchronisation mit niedriger Komplexität in ARTM CPM nach Anspruch 1 oder 2, wobei in dem Schritt 2 der angepasste Unterfilter die angepasste Filterung an dem Basisbandsignal ausführt und die angepasste Filterung auf Folgendem basiert:

$$u(m) = \sum_{n=floor\left\lceil (m+\frac{1}{2})\frac{T}{T_s} \right\rceil}^{floor\left\lceil (m+\frac{3}{2})\frac{T}{T_s} \right\rceil} f(n)\xi(n),$$

wobei $u(m)$ das Resultat der angepassten Filterung ist, das durch Ausführen des angepassten Filterungsprozesses an dem Basisbandsignal über den angepassten Unterfilter erlangt wird, $f(n)$ ein zu filterndes Basisbandsignal ist und $\xi(n)$ ein Filterungskoeffizient des angepassten Unterfilters ist, $T$ die voreingestellte Symboldauer ist und *floor* die Abrundungsfunktion darstellt.

4. Verfahren zum Implementieren von Demodulation und Synchronisation mit niedriger Komplexität in ARTM CPM nach Anspruch 1 oder 2, wobei in dem Schritt 3 die Phasenkompensation auf Folgendem basiert:

$$v(m) = u(m)e^{j\delta(m)};$$

wobei $v(m)$ ein Ausgangsresultat von Phasenkompensation ist, $u(m)$ das zu kompensierende Resultat der ange-passten Filterung ist, $\delta(m)$ eine gekippte Phasendifferenz ist, die einer $m$-ten Symboldauer entspricht, und $\delta(m)$ rekursiv basierend auf dem Modulationsindex aktualisiert wird, der der Symboldauer entspricht.

5. Verfahren zum Implementieren von Demodulation und Synchronisation mit niedriger Komplexität in ARTM CPM nach Anspruch 4, wobei die gekippte Phasendifferenz $\delta(m)$ bei der Phasenkompensation rekursiv basierend auf Folgendem aktualisiert wird:

$$\delta(m) = \delta(m - 1) + 3\pi h'_{m-1},$$

wobei $\delta(m - 1)$ eine gekippte Phasendifferenz ist, die der $(m$-l$)$-ten Symboldauer entspricht, und ein Anfangswert $\delta(0)$ der gekippten Phasendifferenz Null ist; und

wobei $h'_{m-1}$ der Modulationsindex ist, der der $m$-ten Symboldauer entspricht, es $h'_{m-1} = h_1$ im Fall von mod($m$ - 1,2) = 0 und $h'_{m-1} = h_2$ im Fall von mod($m$ - 1,2) = 1 gibt, und $h_1$ und $h_2$ der voreingestellte erste Modulationsindex bzw. der voreingestellte zweite Modulationsindex sind.

6. Verfahren zum Implementieren von Demodulation und Synchronisation mit niedriger Komplexität in ARTM CPM nach Anspruch 1 oder 2, wobei in dem Schritt 4 die Viterbi-Demodulation an dem I-Zweig-Phasenkompensation-Ausgangsvektor $\mathbf{V}'(m)$ ausgeführt wird und die Viterbi-Demodulation Folgendes umfasst:

Schritt 4a, Berechnen von Zweigmetriken basierend auf $\mathbf{V}'(m)$, wobei die Zweigmetriken von $M$ Zweigen, die in jeden Zustand eintreten, in der $m$-ten Symboldauer berechnet werden;

Schritt 4b, Berechnen von $M$ Pfadmetriken für jeden Zustand in der $m$-ten Symboldauer basierend auf den in dem Schritt 4a berechneten Zweigmetriken;

Schritt 4c, Bestimmen eines Überlebenspfads und einer Überlebenspfad-Metrik für jeden Zustand in der m-ten Symboldauer und Speichern des Überlebenspfads und der Überlebenspfad-Metrik für jeden Zustand; und

Schritt 4d: Bestimmen eines Überlebenszustands für die $m$-te Symboldauer und

Rückverfolgen aus dem Überlebenszustand, der ein Rückverfolgungs-Ausgangspunkt gemäß dem in Schritt 4c gespeicherten Überlebenspfad ist, im Fall von $m \geq D_1$ oder $m \geq D_2$;

wobei $D_1$ Symbole zurückverfolgt werden, um im Fall von $m \geq D_1$ *die demodulierten Daten zu erlangen*, $D_2$ Symbole zurückverfolgt werden, um im Fall von $m \geq D_2$ den synchronen Demodulationszustand zu erlangen, $D_1$

eine voreingestellte Rückverfolgungslänge zur Demodulation ist und $D_2$ eine voreingestellte Rückverfolgungslänge zur synchronen Demodulation ist.

7. Verfahren zum Implementieren von Demodulation und Synchronisation mit niedriger Komplexität in ARTM CPM nach Anspruch 6, wobei in dem Schritt 4a die Zweigmetriken basierend auf Folgendem berechnet werden:

$$\beta_{S_{w',k',i}}(m) = \mathrm{Re}\left\{ v'_{p_i}(m) \times e^{-j2\pi\frac{w_i - 1}{W'}} \right\};$$

wobei:

$$\beta_{S_{w',k',i}}(m)$$

eine Zweigmetrik eines $i$-ten Zweigs ist, der in der $m$-ten Symboldauer in einen Zustand $S_{w',k'}$ eintritt, der $i$-te Zweig einem Zustand $S_{n,k}$ in der ($m$-1)-ten Symboldauer entspricht und der Zustand $S_{n,k}$ in der ($m$-1)-ten Symboldauer über den $i$-ten Zweig in den Zustand $S_{w',k'}$ in der $m$-ten Symboldauer eintritt;
$w'$=1, 2, ..., $W$, $k'$= 1, 2 ..., $M$, $i$ = 1, 2, ..., $M$, **Re** eine Funktion zum Aufnehmen eines Realteils darstellt, und $W$ eine voreingestellte Menge von vereinfachten Phasenzuständen ist;

$$v'_{p_i}(m)$$

ein $p_i$-tes Phasenkompensationsresultat in dem I-Zweig-Phasenkompensations-Ausgangsvektor **V**'($m$) ist und $p_i = (k_i - 1) \times M + k'$; und
ein entsprechendes Verhältnis zwischen $w_i$, $k_i$ und $w'$ wie folgt ist:

$$w' = \mathrm{mod}\left( (w_i - 1) + (k_i - 1) \times h'_m \times W, W \right) + 1;$$

wobei $w_i \in \{1,2,3,...,W\}$, $k_i \in \{1,2,3,...,M\}$, $h'_m$ der Modulationsindex entsprechend der $m$-ten Symboldauer ist, $h'_m = h_1$ im Fall von mod($m$, 2) = 0, $h'_m = h_2$ im Fall von mod($m$, 2) = 1, und $h_1$ und $h_2$ der voreingestellte erste Modulationsindex bzw. der voreingestellte zweite Modulationsindex sind.

8. Verfahren zum Implementieren von Demodulation und Synchronisation mit niedriger Komplexität in ARTM CPM nach Anspruch 6, wobei in dem Schritt 4b die Pfadmetriken basierend auf Folgendem berechnet werden:

$$\lambda_{S_{w',k',i}}(m) = \lambda'_{S_{n,k_i}}(m-1) + \beta_{S_{w',k',i}}(m);$$

wobei:

$\lambda_{S_{w',k',i}}(m)$ eine Pfadmetrik ist, die dem $i$-ten Zweig entspricht, der in der $m$-ten Symboldauer den Zustand $S_{w',k'}$ erreicht;

$\beta_{S_{w',k',i}}(m)$ die Zweigmetrik des $i$-ten Zweigs ist, der $i$-te Zweig dem Zustand $S_{n,k}$ in der ($m$-1)-ten Symboldauer entspricht und der Zustand $S_{n,k}$ in der ($m$-1)-ten Symboldauer über den $i$-ten Zweig in den Zustand $S_{w',k'}$ in der

$m$-ten Symboldauer eintritt; $\lambda'_{S_{w_i,k_i}}(m-1)$ die Überlebenspfad-Metrik des Zustands $S_{n,k,}$ in der $(m-1)$-ten Symboldauer ist, und ein Anfangswert $\lambda'_{S_{w_i,k_i}}(0)$ Null ist;

$w'$=1, 2, ..., $W$, $k'$ = 1, 2, ..., $M$, $i$ = 1, 2, ..., $M$ und $W$ eine voreingestellte Menge von vereinfachten Phasenzuständen ist; und

ein entsprechendes Verhältnis zwischen $w_i$, $k_i$ und $w'$ wie folgt ist:

$$w' = \mathrm{mod}\left((w_i - 1) + (k_i - 1) \times h'_m \times W, W\right) + 1;$$

wobei $w_i \in \{1,2,3,...,W\}$, $k_i \in \{1,2,3,...,M\}$, $h'_m$ der Modulationsindex entsprechend der $m$-ten Symboldauer ist, $h'_m = h_1$ im Fall von mod($m$, 2) = 0, $h'_m = h_2$ im Fall von mod($m$, 2) = 1, und $h_1$ und $h_2$ der voreingestellte erste Modulationsindex bzw. der voreingestellte zweite Modulationsindex sind.

9. Verfahren zum Implementieren von Demodulation und Synchronisation mit niedriger Komplexität in ARTM CPM nach Anspruch 6, wobei in dem Schritt 4c der Überlebenspfad und die Überlebenspfad-Metrik durch Folgendes bestimmt wird:

Auswählen, für den Zustand $S_{w',k'}$ in der m-ten Symboldauer, einer maximalen unter den $M$ Pfadmetriken, die dem Zustand $S_{w',k'}$ entsprechen, als die Überlebenspfad-Metrik $\lambda'_{S_{w',k'}}(m)$ für den Zustand $S_{w',k'}$, wobei $\lambda'_{S_{w',k'}}(m) = \max_i(\lambda_{S_{w',k',i}}(m))$, $\lambda'_{S_{w',k'}}(m)$ die $i$-te Pfadmetrik ist, die dem Zustand $S_{w',k'}$ in der $m$-ten Symboldauer entspricht, $i$=1, 2, ..., $M$; und

Bestimmen eines Pfads, der der Überlebenspfad-Metrik $\lambda'_{S_{w',k'}}(m)$ entspricht, als Überlebenspfad des Zustands $S_{w',k'}$ in der $m$-ten Symboldauer, wobei $w'$=1, 2, ..., $W$, $k'$= 1, 2, ..., $M$ und $W$ eine voreingestellte Menge von vereinfachten Phasenzuständen ist.

10. Verfahren zum Implementieren von Demodulation und Synchronisation mit niedriger Komplexität in ARTM CPM nach Anspruch 6, wobei in dem Schritt 4d der Überlebenszustand der $m$-ten Symboldauer durch Folgendes bestimmt wird:
Auswählen, unter allen Zuständen, die der $m$-ten Symboldauer entsprechen, eines Zustands, der einem Maximum der Überlebenspfad-Metriken entspricht, als Überlebenszustand der $m$-ten Symboldauer.

11. Verfahren zum Implementieren von Demodulation und Synchronisation mit niedriger Komplexität in ARTM CPM nach Anspruch 6, wobei der Schritt 4d, Rückverfolgen über $D_1$, um im Fall von $m \geq D_1$ die demodulierten Daten zu erlangen, Folgendes umfasst:

Bestimmen des Überlebenszustands der $m$-ten Symboldauer als Ausgangspunkt zur Rückverfolgung;
Rückverfolgen über die $D_1$ Symbole nacheinander, entsprechend dem Überlebenspfad des entsprechenden Zustands in jeder Symboldauer, der in Schritt 4c gespeichert ist, um einen Zustand $S_{w'_{jt},k'_{jt}}$ einer $(m - D_1)$-ten Symboldauer zu erreichen;
Bestimmen des Zustands $S_{w'_{jt},k'_{jt}}$ als den Demodulationszustand; und Bestimmen der demodulierten Daten basierend auf dem Demodulationszustand, wobei die demodulierten Daten $\alpha(m - D_1) = k_{jt}'$-1 sind, wobei Werte von $k_{jt}'$-1 in einer Eins-zu-Eins-Entsprechung zu Symbolen von ARTM CPM sind;
wobei $w'_{jt} \in \{1,2,3,...,W\}$, $k'_{jt} \in \{1,2,3,...,M\}$ und $W$ eine voreingestellte Menge von vereinfachten Phasenzuständen ist.

12. Verfahren zum Implementieren von Demodulation und Synchronisation mit niedriger Komplexität in ARTM CPM nach Anspruch 6, wobei ein Rückverfolgen über die $D_2$ Symbole, um im Fall von $m \geq D_2$ den synchronen Demodulationszustand zu erlangen, Folgendes umfasst:

Bestimmen des Überlebenszustands der $m$-ten Symboldauer als den Ausgangspunkt zur Rückverfolgung;
Rückverfolgen über die $D_2$ Symbole gemäß dem Überlebenspfad des entsprechenden Zustands in jeder Symboldauer, der im Schritt 4c gespeichert ist, um einen Zustand $S_{w'_{tb},k'_{tb}}$ einer $(m - D_2)$-ten Symboldauer zu erreichen; und

Bestimmen des Zustands $S_{w'_{tb},k'_{tb}}$ als der synchrone Demodulationszustand;
wobei $w'_{tb} \in \{1,2,3,..., W\}$, $k'_{tb} \in \{1,2,3,...,M\}$ und $W$ die voreingestellte Anzahl vereinfachter Phasenzustände ist.

13. Verfahren zum Implementieren von Demodulation und Synchronisation mit niedriger Komplexität in ARTM CPM nach Anspruch 6, wobei in dem Schritt 4d die Länge $D_1$ zur Demodulations-Rückverfolgung und die Länge $D_2$ zur Synchronisation-Demodulation-Rückverfolgung gemäß voreingestellten Anforderungen an Datenentscheidungsgenauigkeit und eine Demodulationsverzögerung bestimmt werden, und $D_1$ und $D_2$ proportional zu der Datenentscheidungsgenauigkeit und zu der Demodulationsverzögerung sind.

14. Verfahren zum Implementieren von Demodulation und Synchronisation mit niedriger Komplexität in **ARTM CPM** nach Anspruch 1 oder 2, wobei in dem Schritt 5 der Zeitfehler $e_\tau(m)$ und der Trägerphasenfehler $e_\varphi(m)$ basierend auf Folgendem berechnet werden:

$$e_\tau(m) = \mathrm{Re}\left\{ e^{-j2\pi\frac{w_o-1}{W}} \left( v''_{p_o}(m) - v_{p_o}(m) \right) \right\}$$

und

$$e_\varphi(m) = \mathrm{Im}\left\{ e^{-j2\pi\frac{w_o-1}{W}} v'_{p_o}(m) \right\},$$

wobei:

der synchrone Demodulationszustand $S_{w'_{tb},k'_{tb}}$ ist, der Überlebenspfad des Zustands $S_{w'_{tb},k'_{tb}}$ einem Zustand $S_{w,k}$ in einer vorherigen Symboldauer entspricht, $w_o = w_{tb}$ und $p_o = (k_{tb} -1) \times M + k'_{tb}$;

$v_{p_o}(m)$ ein $p_o$-tes Phasenkompensations-Ausgangsresultat in $\mathbf{V}(m)$, $v'_{p_o}(m)$ das $p_o$-te Phasenkompensations-Ausgangsresultat in $\mathbf{V}'(m)$ ist, und $v''_{p_o}(m)$ das $p_o$-te Phasenkompensations-Ausgangsresultat in $\mathbf{V}''(m)$ ist;
**Re** eine Funktion zum Aufnehmen eines Realteils darstellt und **Im** eine Funktion zum Aufnehmen eines Imaginärteils darstellt; und
$w'_{tb} \in \{1,2,3,...,W\}$, $k'_{tb} \in \{1,2,3,...,M\}$, $w_{tb} \in \{1,2,3,...,W\}$, $k_{tb} \in \{1,2,3,...,M\}$ und $W$ eine voreingestellte Menge von vereinfachten Phasenzuständen ist.

15. Verfahren zum Implementieren von Demodulation und Synchronisation mit niedriger Komplexität in ARTM CPM nach Anspruch 1 oder 2, wobei in dem Schritt 6

eine Codeschleifenfilterung an dem Zeitfehler $e_\tau(m)$ ausgeführt wird, um einen Betrag für Phasenanpassung zu erlangen, der Betrag für Phasenanpassung an den Code-NCO ausgegeben wird und eine Phase des Impulssignals für Symbolsynchronisation gemäß dem Betrag für Phasenanpassung durch den Code-NCO angepasst wird; und/oder
eine Trägerschleifenfilterung an dem Trägerphasenfehler $e_\varphi(m)$ ausgeführt wird, um einen Betrag für Phasenanpassung auszugeben, der Betrag für Phasenanpassung an den Träger-NCO ausgegeben wird, und die lokale Frequenz des Trägers, die von dem Träger-NCO ausgegeben wird, von dem Träger-NCO entsprechend dem Betrag für Phasenanpassung angepasst wird.

**Revendications**

1. Procédé de mise en œuvre de démodulation et de synchronisation avec une faible complexité dans la modulation de phase continue de télémétrie avancée, ARTM CPM, comprenant :

   l'étape 1, comprenant :

   le retard d'un signal reçu $r(n)$ de $T_s$ pour obtenir un signal retardé de premier ordre $r'(n)$,
   le retard du signal reçu $r(n)$ de $2T_s$ pour obtenir un signal retardé de second ordre $r''(n)$, et
   la réalisation d'un mélange de fréquences et d'un filtrage passe-bas sur $r(n)$, $r'(n)$ et $r''(n)$, respectivement, pour obtenir un signal de bande de base de la branche E $f(n)$, un signal de bande de base de la branche I $f'(n)$ et un signal de bande de base de la branche L $f''(n)$,
   dans lequel $T_s$ est une période d'échantillonnage prédéfinie, et une fréquence locale d'une porteuse dans le mélange de fréquences est commandée par un oscillateur à commande numérique, NCO, de porteuse ;

   l'étape 2, la réalisation d'un filtrage adapté sur les $f(n)$, $f'(n)$ et $f''(n)$ en utilisant alternativement deux bancs de filtres adaptés, pour obtenir un vecteur de résultat de filtrage adapté de la branche E $\mathbf{U}(m)$, un vecteur de résultat de filtrage adapté de la branche I $\mathbf{U'}(m)$, et un vecteur de résultat de filtrage adapté de la branche L $\mathbf{U''}(m)$, respectivement, dans lequel :

   chacun des deux bancs de filtres adaptés comprend $P$ sous-filtres adaptés ;
   les $P$ sous-filtres adaptés réalisent un filtrage adapté sur chacun des signaux de bande de base pour délivrer en sortie un vecteur de résultat de filtrage adapté qui comprend $P$ résultats du filtrage adapté, et $\mathbf{U}(m)$, $\mathbf{U'}(m)$, et $\mathbf{U''}(m)$ sont les vecteurs de résultat de filtrage adapté ;
   $m$ est une variable pour compter les durées des symboles, les opérations d'ajout de un sont réalisées sur $m$ sur la base d'un signal d'impulsion pour la synchronisation des symboles délivré en sortie par un NCO de code, et $m$ a une valeur initiale égale à 0;
   $P = M^2$, où $M$ est une taille prédéfinie d'un alphabet de symboles d'un système de symboles ; et
   la réalisation d'un filtrage adapté sur les $f(n)$, $f'(n)$ et $f''(n)$ en utilisant alternativement deux bancs de filtres adaptés comprend : l'utilisation du premier banc de filtres adaptés pour le filtrage adapté sur les trois branches dans le cas où $\text{mod}(m, 2) = 0$, et l'utilisation du second banc de filtres adaptés pour le filtrage adapté sur les trois branches dans le cas où $\text{mod}(m, 2) = 1$ ;

   l'étape 3, la réalisation d'une compensation de phase sur $\mathbf{U}(m)$, $\mathbf{U'}(m)$ et $\mathbf{U''}(m)$, pour obtenir un vecteur de sortie de compensation de phase de la branche E $\mathbf{V}(m)$, un vecteur de sortie de compensation de phase de la branche I $\mathbf{V'}(m)$ et un vecteur de sortie de compensation de phase de la branche L $\mathbf{V''}(m)$, respectivement ;
   l'étape 4, la réalisation d'une démodulation de Viterbi sur le vecteur de sortie de compensation de phase de la branche I $\mathbf{V'}(m)$ pour obtenir des données démodulées et un état de démodulation synchrone ;
   l'étape 5, le calcul d'une erreur de synchronisation $e_\tau(m)$ et d'une erreur de phase de la porteuse $e_\varphi(m)$, sur la base de $\mathbf{V}(m)$, $\mathbf{V'}(m)$, $\mathbf{V''}(m)$ et de l'état de démodulation synchrone ;
   l'étape 6, comprenant :

   la réalisation d'un filtrage de boucle sur l'erreur de synchronisation $e_\tau(m)$ et l'erreur de phase de la porteuse $e_\varphi(m)$, respectivement, et
   le réglage du NCO de code et du NCO de porteuse en fonction des résultats du filtrage de boucle sur l'erreur de synchronisation $e_\tau(m)$ et l'erreur de phase de la porteuse $e_\varphi(m)$ ; et

   l'étape 7, la répétition de l'étape 1 à l'étape 6 pour mettre en œuvre la démodulation et la synchronisation sur le signal reçu.

2. Procédé de mise en œuvre d'une démodulation et d'une synchronisation avec une faible complexité dans une ARTM CPM selon la revendication 1, dans lequel, à l'étape 2, les coefficients de filtre des sous-filtres adaptés dans les deux bancs de filtres adaptés sont calculés sur la base de :

$$\xi_{p,1}(n) = e^{-j2\pi\left[h_1\gamma_k q(nT_s-(m-1)T)+h_2\gamma_l q(nT_s-mT)\right]}, floor\left((m+\frac{1}{2})\frac{T}{T_s}\right) \le n \le floor\left((m+\frac{3}{2})\frac{T}{T_s}\right);$$

et

$$\xi_{p,2}(n) = e^{-j2\pi\left[h_2\gamma_k q(nT_s-(m-1)T)+h_1\gamma_l q(nT_s-mT)\right]}, floor\left((m+\frac{1}{2})\frac{T}{T_s}\right) \le n \le floor\left((m+\frac{3}{2})\frac{T}{T_s}\right),$$

où :

$\xi_{p,1}(n)$ est un coefficient de filtre d'un $p$-ième sous-filtre adapté dans un premier banc de filtres adaptés, $\xi_{p,2}(n)$ est un coefficient de filtre d'un $p$-ième sous-filtre adapté dans un second banc de filtres adaptés, et $p = (k - 1) \times M + l$ ;

$q(t)$ est une fonction d'impulsion de phase prédéfinie, $q(nT_s - mT)$ est une valeur d'échantillonnage de $q(t)$ à $t = nT_s - mT$, $q(nT_s - (m-1)T)$ est une valeur d'échantillonnage de $q(t)$ à $t = nT_s - (m - 1)T$, et $T$ est la durée de symbole prédéfinie ;

$\gamma_k = 2(k - 1) - (M - 1)$, $\gamma_l = 2(l - 1)-(M-1)$, $k = 1, 2, ..., M$, $l = 1, 2, ..., M$ ; et

$h_1$ et $h_2$ sont un premier indice de modulation prédéfini et un second indice de modulation prédéfini, respectivement, et *floor* représente une fonction arrondi par défaut.

3. Procédé de mise en œuvre d'une démodulation et d'une synchronisation avec une faible complexité dans une ARTM CPM selon la revendication 1 ou 2, dans lequel, à l'étape 2, le sous-filtre adapté réalise le filtrage adapté sur le signal de bande de base, et le filtrage adapté est basé sur :

$$u(m) = \sum_{n=floor\left[(m+\frac{1}{2})\frac{T}{T_s}\right]}^{floor\left[(m+\frac{3}{2})\frac{T}{T_s}\right]} f(n)\xi(n),$$

où $u(m)$ est le résultat du filtrage adapté obtenu en réalisant le processus de filtrage adapté sur le signal de bande de base par l'intermédiaire du sous-filtre adapté, $f(n)$ est un signal de bande de base à filtrer, et $\xi(n)$ est un coefficient de filtrage du sous-filtre adapté, $T$ est la durée de symbole prédéfinie, *et floor* représente la fonction arrondi par défaut.

4. Procédé de mise en œuvre d'une démodulation et d'une synchronisation avec une faible complexité dans une ARTM CPM selon la revendication 1 ou 2, dans lequel, à l'étape 3, la compensation de phase est basée sur :

$$v(m) = u(m)e^{j\delta(m)} ;$$

où $v(m)$ est un résultat de sortie de la compensation de phase, $u(m)$ est le résultat du filtrage adapté à compenser, $\delta(m)$ est une différence de phase inclinée correspondant à une $m$-ième durée de symbole, et $\delta(m)$ est mis à jour de manière récurrente sur la base de l'indice de modulation correspondant à la durée de symbole.

5. Procédé de mise en œuvre d'une démodulation et d'une synchronisation avec une faible complexité dans une ARTM CPM selon la revendication 4, dans lequel, dans la compensation de phase, la différence de phase inclinée $\delta(m)$ est mise à jour de manière récurrente sur la base de :

$$\delta(m) = \delta(m - 1) + 3\pi h'_{m-1},$$

où $\delta(m - 1)$ est une différence de phase inclinée correspondant à la $(m-1)$-ième durée de symbole, et une valeur initiale $\delta(0)$ de la différence de phase inclinée est égale à zéro ; et

où $h'_{m-1}$ est l'indice de modulation correspondant à la $m$-ième durée de symbole, où $h'_{m-1} = h_1$ dans le cas où mod($m$ - 1,2) = 0 et $h'_{m-1} = h_2$ dans le cas où mod(m - 1,2) = 1, et $h_1$ et $h_2$ sont le premier indice de modulation prédéfini et le second indice de modulation prédéfini, respectivement.

6.  Procédé de mise en œuvre d'une démodulation et d'une synchronisation avec une faible complexité dans une ARTM CPM selon la revendication 1 ou 2, dans lequel, à l'étape 4, la démodulation de Viterbi est réalisée sur le vecteur de sortie de compensation de phase de la branche I $\textbf{V}(m)$, et la démodulation de Viterbi comprend :

l'étape 4a, le calcul de métriques de branche sur la base de $\textbf{V}'(m)$, dans lequel les métriques de branche de $M$ branches entrant dans chaque état sont calculées dans la $m$-ième durée de symbole ;

l'étape 4b, le calcul de $M$ métriques du chemin pour chaque état dans la $m$-ième durée de symbole sur la base des métriques de branche calculées à l'étape 4a ;

l'étape 4c, la détermination d'un chemin survivant et d'une métrique du chemin survivant pour chaque état dans la m-ième durée de symbole, et l'enregistrement du chemin survivant et de la métrique du chemin survivant pour chaque état ; et

l'étape 4d, la détermination d'un état survivant de la $m$-ième durée de symbole, et

le retour arrière à partir de l'état survivant étant un point de départ de retour arrière en fonction du chemin survivant enregistré à l'étape 4c, dans le cas où $m \geq D_1$ ou $m \geq D_2$ ;

où les symboles $D_1$ reviennent en arrière pour obtenir les données démodulées dans le cas où $m \geq D_1$, les symboles $D_2$ reviennent en arrière pour obtenir l'état de démodulation synchrone dans le cas où ce $m \geq D_2$, $D_1$ est une longueur de retour arrière prédéfinie pour la démodulation, et $D_2$ est une longueur de retour arrière prédéfinie pour la démodulation synchrone.

7.  Procédé de mise en œuvre d'une démodulation et d'une synchronisation avec une faible complexité dans une ARTM CPM selon la revendication 6, dans lequel, à l'étape 4a, les métriques de branche sont calculées sur la base de :

$$\beta_{S_{w',k',i}}(m) = \text{Re}\left\{ v'_{p_i}(m) \times e^{-j2\pi\frac{w_i - 1}{W}} \right\};$$

où :

$\beta_{S_{w',k',i}}(m)$ est une métrique de branche d'une $i$-ième branche entrant dans un état $S_{w',k'}$ dans la $m$-ième durée de symbole, la $i$-ième branche correspond à un état $S_{n,k}$ dans la $(m\text{-}1)$-ième durée de symbole, et l'état $S_{n,k}$ dans la $(m\text{-}1)$-ième durée de symbole entre dans l'état $S_{w',k'}$ dans la $m$-ième durée de symbole par l'intermédiaire de la $i$-ièmebranche ;

$w' = 1, 2, ..., W$, $k'' = 1, 2 ..., M$, $i = 1, 2, ..., M$, $\textbf{Re}$ représente une fonction pour prendre une partie réelle, et $W$ est une quantité prédéfinie d'états de phase simplifiés ; $v'_{p_i}(m)$ est un $p_i$-ième résultat de compensation de phase dans le vecteur de sortie de compensation de phase de la branche I $\textbf{V}'(m)$ et $p_i = (k_i - 1) \times M + k'$ ; et une relation correspondante entre $w_i$, $k_i$ et $w'$ est :

$$w' = \text{mod}\left( (w_i - 1) + (k_i - 1) \times h'_m \times W, W \right) + 1;$$

où $w_i \in \{1,2,3,...,W\}$, $k_i \in \{1,2,3,...,M\}$, $h'_m$ est l'indice de modulation correspondant à la $m$-ième durée de symbole, $h'_m = h_1$ dans le cas où mod($m$, 2) = 0, $h'_m = h_2$ dans le cas où mod($m$, 2) = 1, et $h_1$ et $h_2$ sont le premier indice de modulation prédéfini et le second indice de modulation prédéfini, respectivement.

8.  Procédé de mise en œuvre d'une démodulation et d'une synchronisation avec une faible complexité dans une ARTM CPM selon la revendication 6, dans lequel, à l'étape 4b, les métriques du chemin sont calculées sur la base de :

$$\lambda_{S_{w',k',i}}(m) = \lambda'_{S_{n,k,}}(m-1) + \beta_{S_{w',k',i}}(m)\,;$$

où :

$\lambda_{S_{w',k',i}}(m)$ est une métrique du chemin correspondant à la $i$-ième branche entrant dans l'état $S_{w',k'}$ dans la $m$-ième durée de symbole ;

$\beta_{S_{w',k',i}}(m)$ est la métrique de branche de la $i$-ième branche, la $i$-ième branche correspond à l'état $S_{n,k}$ dans la $(m$-1)-ième durée de symbole, et l'état $S_{n,k}$ dans la $(m$-1)-ième durée de symbole entre dans l'état $S_{w',k'}$ dans la $m$-ième durée de symbole par l'intermédiaire de la $i$-ième branche ;

$\lambda'_{S_{w_i,k_i}}(m$-1) est la métrique du chemin survivant de l'état $S_{n,k}$ dans la $(m$-1)-ième durée de symbole, et une valeur initiale $\lambda'_{S_{w_i,k_i}}(0)$ est égale à zéro ;

$w' = 1, 2, ..., W$, $k' = 1, 2, ..., M$, $i = 1, 2, ..., M$, et $W$ est une quantité prédéfinie d'états de phase simplifiés ; et une relation correspondante entre $w_i$, $k_i$ et $w'$ est :

$$w' = \mathrm{mod}\Big((w_i - 1) + (k_i - 1) \times h'_m \times W, W\Big) + 1\,;$$

où $w_i \in \{1,2,3,...,W\}$, $k_i \in \{1,2,3,...,M\}$, $h'_m$ est l'indice de modulation correspondant à la $m$-ième durée de symbole, $h'_m = h_1$ dans le cas où $\mathrm{mod}(m, 2) = 0$, $h'_m = h_2$ dans le cas où $\mathrm{mod}(m, 2) = 1$, et $h_1$ et $h_2$ sont le premier indice de modulation prédéfini et le second indice de modulation prédéfini, respectivement.

9. Procédé de mise en œuvre d'une démodulation et d'une synchronisation avec une faible complexité dans une ARTM CPM selon la revendication 6, dans lequel, à l'étape 4c, le chemin survivant et la métrique du chemin survivant sont déterminés par :

la sélection, pour l'état $S_{w',k'}$ dans la m-ième durée de symbole, d'une métrique du chemin maximale parmi les $M$ métriques du chemin correspondant à l'état $S_{w',k'}$ en tant que métrique du chemin survivant $\lambda'_{S_{w',k'}}(m)$ pour l'état $S_{w',k'}$, où $\lambda'_{S_{w',k'}}(m) = \max_i (\lambda_{S_{w',k',i}}(m))$, $\lambda'_{S_{w',k'}}(m)$ est la $i$-ième métrique du chemin correspondant à l'état $S_{w',k'}$ dans la $m$-ième durée de symbole, $i = 1, 2, ..., M$ ; et

la détermination d'un chemin correspondant à la métrique du chemin survivant $\lambda'_{S_{w',k'}}(m)$ en tant que chemin survivant de l'état $S_{w',k'}$ dans la $m$-ième durée de symbole, où $w' = 1, 2, ..., W$, $k' = 1, 2, ..., M$, et $W$ est une quantité prédéfinie d'états de phase simplifiés.

10. Procédé de mise en œuvre d'une démodulation et d'une synchronisation avec une faible complexité dans une ARTM CPM selon la revendication 6, dans lequel, à l'étape 4d, l'état survivant de la $m$-ième durée de symbole est déterminé par :
la sélection, parmi tous les états correspondant à la $m$-ième durée de symbole, d'un état correspondant à une métrique du chemin survivant maximale parmi les métriques du chemin survivant en tant qu'état survivant de la $m$-ième durée de symbole.

11. Procédé de mise en œuvre d'une démodulation et d'une synchronisation avec une faible complexité dans une ARTM CPM, selon la revendication 6, dans lequel, à l'étape 4d, le retour arrière vers le symbole $D_1$ pour obtenir les données démodulées dans le cas où $m \geq D_1$ comprend :

la détermination de l'état survivant de la $m$-ième durée de symbole comme point de départ du retour arrière ;
le retour arrière sur les symboles $D_1$ dans l'ordre, selon le chemin survivant de l'état correspondant dans chaque durée de symbole qui est enregistrée à l'étape 4c, pour atteindre

un état $S_{w'_{jt},k'_{jt}}$ d'une *(m - D$_1$)*-ième durée de symbole ;

la détermination de l'état $S_{w'_{jt},k'_{jt}}$ en tant qu'état de démodulation ; et la détermination des données démodulées sur la base de l'état de démodulation, dans lequel les données démodulées sont $\alpha(m - D_1) = k_{jt}'$ -1, où les valeurs de $k_{jt}'$-1 sont en correspondance biunivoque avec les symboles de ARTM CPM ;
où $w'_{jt} \in \{1,2,3,...,W\}$, $k'_{jt} \in \{1,2,3,...,M\}$, et *W* est une quantité prédéfinie d'états de phase simplifiés.

**12.** Procédé de mise en œuvre d'une démodulation et d'une synchronisation avec une faible complexité dans une ARTM CPM selon la revendication 6, dans lequel le retour arrière sur les symboles $D_2$ pour obtenir l'état de démodulation synchrone dans le cas où $m \geq D_2$ comprend :

la détermination de l'état survivant de la *m-ième* durée de symbole comme point de départ du retour arrière ;
le retour arrière sur les symboles $D_2$, selon le chemin survivant de l'état correspondant dans chaque durée de symbole qui est enregistrée à l'étape 4c, pour atteindre un état $S_{w'_{tb},k'_{tb}}$ d'une *(m - D$_2$)*-ième durée de symbole ; et

la détermination de l'état $S_{w'_{tb},k'_{tb}}$ comme état de démodulation synchrone ;
où $w'_{tb} \in \{1,2,3,...,W\}$, $k'_{tb} \in \{1,2,3,...,M\}$, et *W* est le nombre prédéfini d'états de phase simplifiés.

**13.** Procédé de mise en œuvre d'une démodulation et d'une synchronisation avec une faible complexité dans une ARTM CPM selon la revendication 6, dans lequel, à l'étape 4d, la longueur $D_1$ pour le retour arrière de la démodulation et la longueur $D_2$ pour le retour arrière de la démodulation de synchronisation sont déterminées selon des exigences prédéfinies de précision de décision de données et de retard de démodulation, et $D_1$ et $D_2$ sont proportionnels à la précision de décision de données et au retard de démodulation.

**14.** Procédé de mise en œuvre d'une démodulation et d'une synchronisation avec une faible complexité dans une **ARTM CPM**, selon la revendication 1 ou 2, dans lequel, à l'étape 5, l'erreur de synchronisation $e_\tau(m)$ et l'erreur de phase de la porteuse $e_\varphi(m)$ sont calculées sur la base de :

$$e_\tau(m) = \mathrm{Re}\left\{ e^{-j2\pi\frac{w_o-1}{W}} \left( v''_{p_o}(m) - v_{p_o}(m) \right) \right\}$$

et

$$e_\varphi(m) = \mathrm{Im}\left\{ e^{-j2\pi\frac{w_o-1}{W}} v'_{p_o}(m) \right\},$$

où :

l'état de démodulation synchrone est $S_{w'_{tb},k'_{tb}}$, le chemin survivant de l'état $S_{w'_{tb},k'_{tb}}$ correspond à un état $S_{w,k}$ dans une durée de symbole précédente, $w_o = w_{tb}$, et $p_o = (k_{tb} - 1) \times M + k'_{tb}$ ;

$v_{p_o}(m)$ est un $p_o$-ième résultat de sortie de compensation de phase dans **V***(m)*, $v'_{p_o}(m)$ est le $p_o$-ième résultat de sortie de compensation de phase dans **V'***(m)*, et $v''_{p_o}(m)$ est le $p_o$-ième résultat de sortie de compensation de phase dans **V''**(m) ;
**Re** représente une fonction permettant de prendre une partie réelle, et **Im** représente une fonction permettant de prendre une partie imaginaire ; et
$w'_{tb} \in \{1,2,3,...,W\}$, $k'_{tb} \in \{1,2,3,...,M\}$, $w_{tb} \in \{1,2,3,...,W\}$, $k_{tb} \in \{1,2,3,...,M\}$, et *W* est une quantité prédéfinie d'états de phase simplifiés.

15. Procédé de mise en œuvre d'une démodulation et d'une synchronisation avec une faible complexité dans une ARTM CPM selon la revendication 1 ou 2, dans lequel, à l'étape 6,

un filtrage de boucle de code est réalisé sur l'erreur de synchronisation $e_\tau(m)$ pour obtenir une quantité pour le réglage de phase, la quantité pour le réglage de phase est délivrée en sortie au NCO de code, et une phase du signal d'impulsion pour la synchronisation des symboles est réglée par le NCO de code selon la quantité pour le réglage de phase ; et/ou

un filtrage de boucle de porteuse est réalisé sur l'erreur de phase de la porteuse $e_\varphi(m)$ pour délivrer en sortie une quantité pour le réglage de phase, la quantité pour le réglage de phase est délivrée en sortie au NCO de porteuse, et la fréquence locale de la porteuse délivrée en sortie par le NCO de porteuse est réglée par le NCO de porteuse selon la quantité pour le réglage de phase.

**Figure 1**

**Figure 2**

**Figure 3**

**Figure 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009175384 A1

**Non-patent literature cited in the description**

- **YANG CHUN-XIAO et al.** Joint Symbol Timing and Carrier Phase Estimation for Multi-h CPM. *Journal of System Simulation,* October 2009, vol. 21 (19), 6207-6010